# EUROPEAN PATENT SPECIFICATION

(11) **EP 2 340 617 B1**
(45) Date of publication and mention of the grant of the patent: **01.01.2020**
(21) Application number: 09779375.6
(22) Date of filing: 28.04.2009
(51) Int. Cl.: H04B 7/024, H04B 17/14, H04B 17/382

(54) **TECHNIQUES FOR UPLINK COOPERATION OF ACCESS NODES**
TECHNIKEN ZUR AUFWÄRTSSTRECKEN-KOOPERATION VON ZUGANGSKNOTEN
TECHNIQUES DE COOPÉRATION EN LIAISON MONTANTE DE NOEUDS D'ACCÈS

(30) Priority: 26.09.2008 US 100384 P
(43) Date of publication of application: 06.07.2011
(73) Proprietor: Telefonaktiebolaget LM Ericsson (publ), 164 83 Stockholm (SE)
(72) Inventor: HOYMANN, Christian, 52064 Aachen (DE); LARSSON, Peter, S-169 71 Solna (SE); FALCONETTI, Laetitia, 52070 Aachen (DE)
(74) Representative: Ericsson
(86) International application number: PCT/EP2009/055157
(87) International publication number: WO 2010/034528

(56) References cited:
- WO-A-02/15613
- WO-A-2004/015959
- WO-A-2007/003034

## Description

### Technical Field

The present invention relates to techniques for uplink cooperation of access nodes, e.g. base stations or sections of base stations in a mobile communication network.

### Background

Cellular systems in general suffer from co-channel interference. For example, simultaneous transmissions may use the same physical resources and thus generate mutual interference. This co-channel interference reduces the signal quality, which may be measured as signal to interference plus noise ratio (SINR). The reduced signal quality in turn reduces the system capacity.

Future wireless networks, e.g. 3^{rd} Generation Partnership Project Long Term Evolution (3GPP LTE) and 3GPP LTE Advanced, with a more dense deployment of access nodes, e.g. base stations (BSs), or with a higher density of users will most probably remain interference-limited.

A concept as described in EP 1714518 B1 allows for collecting receive (Rx) signals received at several receiving nodes. The Rx signals may be soft complex baseband signals, i.e. compressed quantized In Phase/Quadrature (IQ) samples, or residual soft complex baseband signals where already detected streams are cancelled out. The collected Rx signals are jointly processed so that co-channel interference is cancelled. Furthermore, the joint reception at several receiving nodes may increase the signal strength of the carrier signal.

Further, there exist proposals to use an approach of cooperating BSs, e.g. in 3GPP LTE Advanced. In this approach, Rx signals are collected from a plurality of BSs. However, no details are given how groups of cooperating BSs are established and how signals could be exchanged between cooperating BSs. For example, in order to cancel co-channel interference, an interfering stream needs to be decoded and re-encoded. In order to do so, certain transmit parameters are required. The message exchange as described in EP 1714518 B1 does not consider the required transmit parameters.

WO 02/15613 A1 describes cooperative diversity in a wireless communication system and specifically suggests improving diversity gain by cooperation of multiple wireless devices in reception of a downlink signal.

In addition, coordination of BSs is required for cooperating BSs, and the coordination needs to be integrated into the scheduling of uplink (UL) data traffic. Furthermore, collecting the Rx signals at a central node can be problematic in case the central node is unavailable or heavily loaded. Also, exchanging Rx signals between all BSs of a communication network is problematic as it heavily loads the BS as well as any interconnecting network nodes or other network components.

Accordingly, there is a need for techniques that overcome the aforementioned problems and allow for efficiently receiving a signal from a terminal at a first access node with support of at least a second access node.

### Summary

It is an object of the present invention to meet the above need. This is achieved by the features of the independent claims. The dependent claims define further embodiments of the invention.

A method for optimizing a signal received from a terminal of a communication network comprising a plurality of access nodes is provided. The terminal is associated with a first access node of the access nodes. According to the method, the first access node receives a first signal from the terminal. Further, the first access node sends a request to a second access node of the access nodes for requesting information relating to a second signal received from the terminal at the second access node. The requested information is received by the first access node. On the basis of the received information and information relating to the first signal, the first access node determines the optimized signal. Determining the optimized signal may comprise combining the information relating to the first signal with the information relating to the second signal for creating the optimized signal or selecting the information relating to the first signal or the information relating to the second signal as the optimized signal.

The request may be sent before the reception of the first signal at the first access node or after the reception of the first signal at the first access node.

Furthermore, a method for optimizing a signal received from a terminal of a communication network comprising a plurality of access nodes is provided. The terminal is associated with a first access node of the access nodes. According to the method, a second access node of the access nodes receives a request from the first access node. The request requests information relating to a signal received from the terminal at the second access node. The second access node receives the signal from the terminal and obtains the requested information from the received signal. The second access node sends the requested information to the first access node.

The request may be received before the reception of the signal at the second access node. Alternatively, the request may be received after the reception of the signal at the second access node, and the received signal may be stored by the second access node.

An access node is provided which is adapted to operate as the first access node in the above-mentioned methods.

Furthermore, an access node is provided which is adapted to operate as the second access node in the above-mentioned methods.

A computer program is provided, which is loadable into a processing unit of a first access node in a communication network comprising a plurality of access nodes. The first access node is associated with a terminal. According to this aspect, the computer program comprises code adapted to execute the following steps:
- receiving a first signal from a terminal,
- sending a request to a second access node of the access nodes for requesting information relating to a second signal received from the terminal at the second access node,
- receiving the requested information, and
- determining an optimized signal based on the received information and information relating to the first signal.

A computer program is provided, which is loadable into a processing unit of a second access node in a communication network comprising a plurality of access nodes. The plurality of access nodes comprises a first access node associated with a terminal. According to this aspect, the computer program comprises code adapted to execute the following steps:
- receiving a request from the first access node, the request requesting information relating to a signal received from the terminal at the second access node,
- receiving the signal from the terminal,
- obtaining the requested information from the received signal, and
- sending the requested information to the first access node.

A computer-readable medium product is provided, which comprises a computer program according to any one of the above embodiments.

A communication network is provided, which comprises a first access node and a second access node. The first access node is adapted to perform the following steps:
- receiving a first signal from a terminal,
- sending a request to the second access node for requesting information relating to a second signal received from the terminal at the second access node,
- receiving the requested information, and
- determining an optimized signal based on the received information and information relating to the first signal.

The second access node is adapted to perform the following steps:
- receiving the request from the first access node,
- receiving the second signal from the terminal,
- obtaining the requested information from the second signal, and
- sending the requested information to the first access node.

Here, it is to be understood that steps may be executed according to the order as described above or according to a different order.

### Brief description of the drawings

Fig. 1 schematically illustrates a communication network environment in which concepts according to embodiments of the present invention can be applied.
Fig. 2 schematically illustrates an implementation of devices in a communication network according to an embodiment of the invention.
Fig. 3 schematically illustrates a further implementation of devices in a communication network according to an embodiment of the invention.
Fig. 4 schematically illustrates a first example of a process for UL cooperation between access nodes according to an embodiment of the invention.
Fig. 5 schematically illustrates a second example of a process for UL cooperation between access nodes according to an embodiment of the invention.
Fig. 6 schematically illustrates a third example of a process for UL cooperation between access nodes according to an embodiment of the invention.
Fig. 7 schematically illustrates a terminal and an ensemble of access nodes, from which a set of access nodes is selected for UL cooperation with respect to the terminal.
Fig. 8 schematically illustrates the set of selected of access nodes in Fig.7, and communication between access nodes of the set and the terminal.
Fig. 9 shows a flowchart for illustrating a method according to an embodiment of the invention.
Fig. 10 shows a flowchart for illustrating a further method according to an embodiment of the invention.

### Detailed description of embodiments

In the following, the invention will be explained in more detail by referring to exemplary embodiments which relate to methods, devices and computer programs for on-demand uplink cooperation of access nodes, in particular base stations, with distributed control.

An access node can be embodied in a BS or a section of a BS. Further, an access node may also be an e-Node-B (eNB). A section of a BS may be regarded as a unit to cover a cell area of a cellular radio frequency (RF) communication network. Such a unit typically comprises one or more antennas, RF-parts such as filters and power-amplifiers or low-noise amplifiers, and signal processing means. Cooperative signal communication may be achieved via at least two access nodes, e.g. a first BS and a second BS and/or a first section of a first BS and a second section of the same BS or of a second BS. BS-to-BS-cooperation may be also denoted as inter-base-station cooperation or inter-eNB cooperation, and section-to-section-cooperation of the same base station also as intra-base-station cooperation or intra-eNB cooperation.

In the description of the following embodiments, the terms "access node" and "base station" are used in a synonymous manner. This has been done for legibility and illustrative reasons and is not meant to exclude section-to-section cooperation, be it with the same or between different base stations, from being applicable to the following embodiments.

According to the concepts explained in the following, a scheme is proposed, which enables a first access node to gather information relating to Rx signals from one or more further access nodes on an on-demand basis. The access nodes may be BSs, e.g. LTE BSs, or sections of a BS or of multiple BSs. According to some embodiments, this can be achieved by means of a request-response mechanism initiated by the first access node towards a set of selected further access nodes, thereby requesting information relating to Rx signals received by the further access nodes. According to other embodiments, a subscribe-publish mechanism may be used, in which an access node offers to publish information relating to Rx signals to other access nodes. Here, it is to be understood that in a request-response mechanism the first access node will issue a request message to the second access node and the second access node will respond by sending a response message to the first access node. In a subscribe-publish mechanism the first access node will send a subscribe message to the second access node and the second access node will then send the published information to the first access node, which may occur several times until the first access nodes sends and unsubscribe message to the second access node. Due to the above functionalities, both the request message and the subscribe message may be regarded as a request for information from the second access node. The subscribe-publish mechanism may thus be regarded as a request-response mechanism in which a request, i.e. subscribe message, is followed by one or more responses, i.e. publish messages. The requested information relating to the Rx signals can have an arbitrary type, e.g., IQ samples, soft values of demodulated bits, also referred to as soft bits, e.g. in the form of Log-Likelihood Ratios (LLRs), decoded bits, e.g. in the form of hard bits, or the like.

The most promising further access nodes, e.g. co-channel BSs, can be selected by the first access node to participate in the cooperative transmission and/or reception of signals. In some embodiments, the first access node may be a serving BS, which controls communication of the terminal with the communication network, and the further access nodes are selected from co-channel BSs to serve as supporting BSs, which typically have no control functionality. The scheme allows a dynamic, on-demand cooperation between BSs, it allows exchanging additional parameters required for Interference Cancellation (IC), and it allows operating under distributed control without requiring a central controlling node. Finally, it allows integrating the information exchange into the regular BS UL scheduling as defined by 3GPP LTE. Cooperative and non-cooperative transmission and/or reception can take place simultaneously.

The presented scheme can allow multiple modes of operation, e.g. according to a reactive approach, in which the serving access node requests the information from the supporting access node after receiving the Rx signal from the terminal, and a proactive approach, in which the serving access node requests the information from the supporting access node before receiving the Rx signal from the terminal.

According to an embodiment, a proactive approach may work as follows: a BS identifies the need for cooperation for a specific user equipment (UE) that is served by that BS prior to the actual transmission. The "serving BS" identifies one or more candidate BSs ("supporting BSs") that could potentially support that UE. Having scheduled that UE on particular resources, e.g., LTE physical resource blocks (RBs), the serving BS requests the required Rx signal from one or more potentially supporting BSs. The supporting BSs respond with the requested Rx signal. The request and/or the response may comprise additional parameters, e.g. for co-channel IC.

When applying a reactive approach, the request for cooperation may be triggered based on a failed decoding attempt. The message exchange in the reactive approach is similar to the exchange in the proactive approach, but the timing of the sending of the request in relation to the reception of the Rx signal is different.

If the requested support cannot be offered by the supporting BS, it can reject the request. If the serving BS does no longer need cooperation, it can cancel the request as well.

In the following, embodiments of the present invention will be explained in more detail by referring to the accompanying drawing.

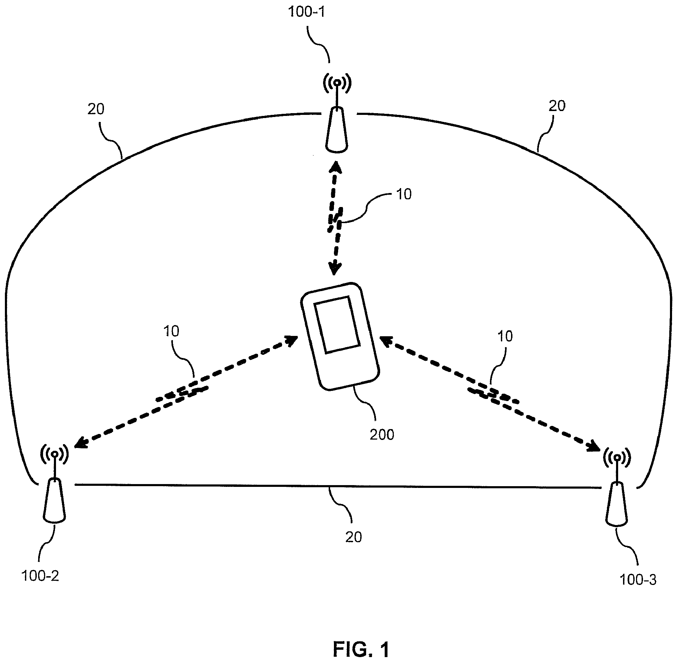

Fig. 1 shows a mobile communication network environment, in which concepts according to embodiments of the present invention may be applied. For example, the mobile communication network environment may be an LTE network. The mobile communication network environment comprises a plurality of access nodes 100-1, 100-2, 100-3 and a mobile terminal 200. In the following, it will be assumed that the access nodes 100-1, 100-2, 100-3 are BSs of the communication network. However, it is to be understood that the access nodes may also be section of the same BS or of different BSs. The terminal 200 may be a mobile phone, a portable computer or other type of user eqipment (UE). In the following the terminal will thus also be referred to as UE.

The BSs 100-1, 100-2, 100-3 may cooperatively communicate with the terminal 200 by transmitting, i.e. sending and/or receiving, a communication signal 10 on different communication paths, i.e. a first communication path between the BS 100-1 and the terminal 200, a second communication path between the BS 100-2 and the terminal 200, and a third communication path between the BS 100-3 and the terminal 200. One of the BSs, e.g. the BS 100-1, may be a serving BS, and the other BSs, e.g. the BSs 100-2, 100-3, may be supporting BSs. Cooperative reception of the communication signal 10 by the BSs 100-1, 100-2, 100-3 may also be referred to as UL cooperation, whereas cooperative transmission of the communication signal from the BSs 100-1, 100-2, 100-3 may also be referred to as DL cooperation. For cooperatively receiving the communication signal 10, the BSs 100-1, 100-2, 100-3 exchange information concerning individual Rx signals from the terminal 200, e.g. the supporting BS 100-2 may transmit information relating to the Rx signal from the terminal 200 to the serving BS 100-1, and the supporting BS 100-3 may transmit information relating to the Rx signal from the terminal 200 to the serving BS 100-1. For this purpose, the BSs 100-1, 100-2, 100-3 exchange a cooperation signal 20, e.g. via a transport network.

It is to be understood that an arbitrary number of BSs could participate in the cooperative reception. For example, there could be only one supporting BS or there could be two, three, four or more supporting BSs.

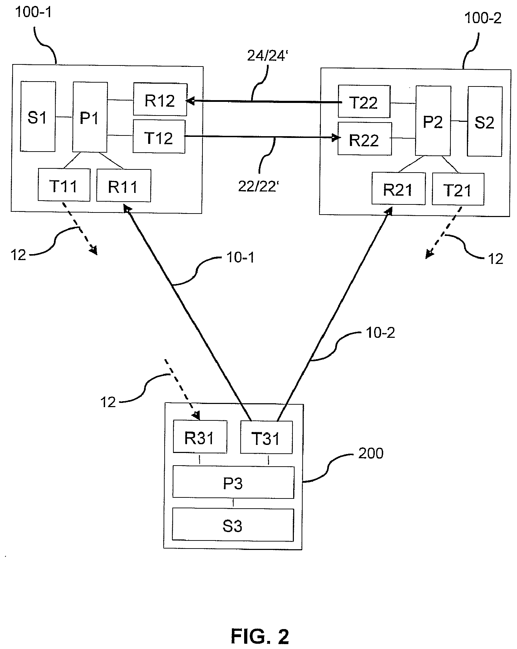

Fig. 2 schematically illustrates an exemplary implementation of devices according to an embodiment of the invention which relates to UL cooperation of access nodes. Further, Fig. 2 also illustrates communication between these devices. In Fig. 2, elements which are similar to those of Fig. 1 have been designated with the same reference signs. Additional information concerning these elements can thus be obtained from the above explanations in connection with Fig. 1.

In Fig. 2, a serving access node (BS1) 100-1 , e.g. a serving BS, a supporting access node (BS2) 100-2, e.g. a supporting BS, and a terminal or UE 200 are depicted. It is to be understood that the access nodes may also be section of the same BS or of different BSs. In the following, the serving access node 100-1 may also be referred to as first access node or first BS, and the supporting access node 100-2 may also be referred to as second access node or second BS. The supporting access node 100-2 may have been selected for a cooperation with the serving access node 100-1 so as to optimize the signal reception from the terminal 200, e.g. according to one or more selection criteria.

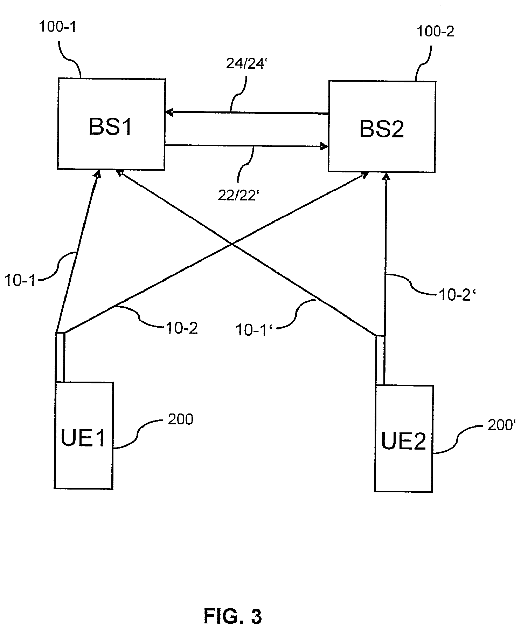

For illustrative reasons, further one or more possible supporting access nodes, which may be selected or not, or further one or more access nodes that do not qualify at all for support, e.g. because there exists no link between the serving access node and these one or more further access nodes, are not depicted. Further possible terminals which could be associated to the access nodes 100-1, 100-2 or to any further access node are not depicted as well. A situation with a further terminal, which can be associated to the supporting access node 100-2 and could send a signal which interferes with signals from the terminal 200 will be explained below, in connection with Fig. 3. In such a situation, optional parameters exchanged between the serving access node 100-1 and the supporting access node 100-2, e.g. in request messages and/or response messages, may allow to mitigate or even cancelling the interfering signal.

Further, it should be noted that an access node, e.g. one of the access nodes 100-1, 100-2, can be a serving access node for a particular terminal while it is a supporting access node for another terminal. If the terminal moves and a further access node takes over the role of the serving access node, the previous serving access node may take over the role of a supporting node or may not be considered anymore for cooperation.

The individual devices 100-1, 100-2, 200 each comprise one or more sub-units with a sub-unit starting with T denoting a transmission unit or transmitter, a sub-unit starting with R denoting a receiving unit or receiver, a sub-unit starting with P denoting a processing unit or processor, and a sub-unit starting with S denoting a storage unit or memory.

The terminal 200 comprises a transmission unit T31 for sending a signal 10-1 to the serving access node 100-1 and a signal 10-2 to the supporting access node 100-2. In practice, the signals 10-1 and 10-2 are typically transmitted by the terminal 200, i.e. the transmission unit T31, as one transmit (Tx) signal only. Due to a, typically non-directive, antenna of the terminal 200 and the channel characteristics the Tx signal is received by the serving access node 100-1 as the Rx signal 10-1 and by the supporting access node 100-2 as the Rx signal 10-2. Typically, the terminal 200, which may be a mobile phone or the like, comprises further units as depicted, e.g. a receiving unit R31 for receiving messages 12, e.g. from the serving access node 100-1 or from the supporting access node 100-2 as illustrated by the dashed arrows, a processing unit P3 for processing information and messages, and a storage unit S3 for storing and retrieving information. It should be noted that for the concepts as described herein the receiving unit R31 is optional. However, most terminals such as mobile phones will comprise such a receiving unit. Nonetheless, it is also conceivable that the terminal 200 is be a sender without reception functionalities, but still optionally comprising, in addition to the transmission unit T31, the processing unit P3 and/or the storage unit S3.

The serving access node 100-1 comprises a receiving unit R11, and the supporting access node 100-2 comprises a receiving unit R21, for receiving the signal 10-1 and 10-2, respectively, from the terminal 200. Here it is to be understood that the receiving units R11, R21 may also be used for receiving signals from possible further terminals not shown here. Typically, the serving access node 100-1 further comprises a transmission unit T11, and the supporting access node 100-2 further comprises a transmission unit T21, e.g. to transmit signals to the terminal 200 or to further terminals not shown here. It should be noted that for the concepts as described herein the transmission units T11 and T21 are optional. However, most access nodes, such as LTE BSs, will comprise such a transmission unit anyway for bidirectional communication with terminals, Nonetheless, it is also conceivable that the access nodes 100-1 and/or the access node 100-2 are, with respect to the terminal 200, implemented as a receiver without transmitting functionalities, while they do provide sending and receiving capabilities towards each other to exchange signals, e.g. request messages 22, subscribe messages 22', and response messages 24/24'. As further illustrated, the access node 100-1 may comprise a processor P1, and a storage unit S1. Similarly, the access node 100-2 may comprise a processing unit P2 and a storage unit S2. The access nodes 100-1 may thus be provided with a processing capability for processing the exchanged and received information and/or with also storage capability for storing data.

In addition, the serving access node 100-1 comprises a transmission unit T12 for transmitting signals to other access nodes, e.g. to the supporting access node 100-2, and a receiving unit R12 for receiving signals from other access nodes, e.g. from the supporting access node 100-2. Similarly, the supporting access node 100-2 comprises a transmission unit T22 for transmitting signals to other access nodes, e.g. to the serving access node 100-1, and a receiving unit R22 for receiving signals from other access nodes, e.g. from the serving access node 100-1. The transmission unit T12 and the receiving unit R12 thus provide an interface of the serving access node 100-1 with respect to other access nodes, e.g. the supporting access node 100-2, and the transmission unit T22 and the receiving unit R22 thus provide an interface of the supporting access node 100-2 with respect to other access nodes, e.g. the serving access node 100-1.

Using its transmission unit T12, the serving access node 100-1 can request information relating to the signal 10-2, received at the supporting access node 100-2 from the terminal 200, from the supporting access node 100-2, e.g. by sending a request message 22 or a subscribe message 22' to the supporting access node 100-2. The request message 22 and the subscribe message will be further explained below. The supporting access node 100-2 receives the signal 10-2 via its receiving unit R21. The processing unit P2 is adapted to obtain the requested information from the received signal 10-2. The supporting access node 100-2 can send the requested information via its transmission unit T22 to the receiving unit R12 of the serving access node 100-1, e.g. in a response message 24 or in a publish message 24' as further explained below. The processing unit P1 of the serving access node is adapted to determine an optimized Rx signal from the terminal, which is accomplished on the basis on the requested information as received from the supporting access node 100-2 and on corresponding information relating to the signal 10-1, which is received by the serving access node itself.

Transmission unit T12 and receiving unit R22 may be connected directly, e.g. with a cable, or indirectly, e.g. through any wireless or wired transport network with intermediate switching and/or routing nodes. Similarly, transmission unit T22 and receiving unit R12 may be connected directly, e.g. with a cable, or indirectly, e.g. through any wireless or wired transport network with intermediate switching and/or routing nodes.

Accordingly, the serving access node 100-1 and the supporting access node 100-2 may communicate via dedicated physical connection, e.g. cable or fiber, directly connecting the serving access node 100-1 and the supporting access node 100-2. According to another example, the serving access node 100-1 and the supporting access node 100-2 may communicate via a switched or routed communication network with intermediate switching or routing nodes. An example for an interconnection of access nodes suitable for implementing the concepts as described herein is the interface X2 according to the 3GPP LTE specification, which is an IP-based interface being independent of the underlying transport network.

Receiving units R11 and R12 may use different communication technologies, e.g. for communicating with the terminal 200, via the transmission unit T31, a wireless communication technique such as LTE may be used, and for communicating with the supporting access node 100-2, via the transmission unit T22, a wired communication technique may be used, such as Ethernet. The same applies to the transmission units T11 and T12 as well as for the corresponding units R21 and R22 or T21 and T22 of the supporting access node 100-2. However, implementations are conceivable wherein receiving units R11 and R12 may be of the same communication technology, e.g. both wireless, even being combined into one receiving unit. The same may apply for the transmission units T11 and T12 as well for the corresponding sub-units of the supporting access node 100-2, i.e. the receiving units R21 and R22 or the transmission units T21 and T22. A receiving unit and a corresponding transmission unit in the same device, such as the receiving unit R11 and the transmission unit T11, the receiving unit R12 and the transmission unit T12, the receiving unit R21 and the transmission unit T21, the receiving unit R22 and the transmission unit T22, or the receiving unit R31 and the transmission unit T31, may be combined in a transceiving unit or transceiver.

Fig. 3 schematically illustrates a further exemplary implementation of devices according to an embodiment of the invention. In addition, Fig. 3 also illustrates communication between these devices. In Fig. 3, elements which are similar to those of Figs. 1 and 2 have been designated with the same reference signs. Additional information concerning these elements can thus be obtained from the above explanations in connection with Figs. 1 and 2. As compared to Fig. 2, Fig. 3 illustrates a situation in which, in addition to the terminal 200, there is a further terminal 200'. The further terminal 200' may have similar structures and functionalities as the terminal 200, e.g. as shown and explained in connection with Fig. 2. In the following, the terminal 200 will also be referred to as first terminal, the further terminal 200' will also be referred to as second terminal.

As in the situation of Fig. 2, the first access node 100-1 receives the signal 10-1 from the first terminal 200, and the second access node receives the signal 10-2 from the first terminal 200. Further, the first access node 100-1 receives a signal 10-1' from the second terminal 200', and the second access node 100-2 receives a signal 10-2' from the second terminal 200'.

For the first terminal 200, the first access node 100-1 is the serving access node. In other words, the terminal 200 is associated with the first access node 100-1, and the second access node 100-2 is the supporting access node. The second access node 100-2 further be the serving access node for the second terminal 200'. In other words, if the access node 100-2 is the serving access node for the second terminal 200', the second terminal is associated with the second access node 100-2. In other scenarios, the second access node 100-2 may be a supporting access node for the second terminal 200'.

The first access node 100-1 may request information relating to the signal 10-2 from the second access node 100-2, e.g. by sending a request message 22 or a subscribe message 22' to the second access node 100-2. The second access node, which receives the signal 10-2, obtains information relating to the signal 10-2, e.g. in accordance with one ore more parameters and/or type information in the request from the first access node 100-1. The second access node 100-2 can further obtain information relating to the signal 10-2' from the second terminal 200'. If the second access node 100-2 is the serving access node for the second terminal 200', the second access node 100-2 does not necessarily have to obtain the requested information from the received signal 10-2', but may determine the information from a storage or memory, in which communication parameters like modulation scheme or code rate for signals exchanged with the second terminal 200' are stored.

The second access node 100-2 can then send a response comprising the information relating to the signal 10-2 and the information relating to the signal 10-2' to the first access node 100-1. As mentioned above, the latter information may be obtained from the received signal 10-2' or, in the case the second access node 100-2 is the serving access node for the second terminal 200', from a storage or memory. The information relating to the signal 10-2 and the information relating to the signal 10-2' may be sent in a single response message 24 or publish message 24', or in separate response messages 24 or in separate publish messages 24'. Details concerning the request messages 22, the subscribe messages 22', the response messages 24, or the publish messages 24' are explained below.

The obtaining and sending of information relating to the signal 10-2' from the further terminal 200' by the second access node 200' may be triggered by the request from the first access node 100-1, e.g. the request may in addition comprise type information or one or more parameters for specifying dedicated information relating to the signal 10-2' from the further terminal 200'. Alternatively, the request may not comprise such additional request information. In the latter alternative, the second access node 100-2 may be configured to obtain and send such information relating to the signal 10-2' from the further terminal 200', or to signals from further terminals, to the first access node 100-1, e.g. for any signal from any further terminal in general or if a signal from a further terminal matches a given threshold or based on location-based information, e.g. for the first terminal 200 and the second terminal 200' being located in close vicinity at the respective edges of the coverage areas of the first access node 100-1 and second access node 100-2, where signal interference may be more significant.

The first access node 100-1 can then determine the optimized signal based on information relating to the signal 10-1, on the received information relating to the signal 10-2, and on the received information relating to the signal 10-2'. This can be of advantage if the signal received at the first access node 100-1 is a superposition of signals 10-1 and 10-1'. According to an embodiment, the optimized signal is determined by using the information relating to the signal 10-2' to remove or mitigate the signal 10-1' from the signal 10-1, e.g. by means of an interference cancellation (IC) mechanism. In addition, combining the information relating to the signal 10-1 with the information relating to the signal 10-2 or selecting one of the information relating to the signal 10-1 and the information relating to the signal 10-2, can lead to a further optimization.

The above description in connection with of Figs. 2 and 3 has been written from the perspective of inter-base-station cooperation. For section-to-section cooperation, reference sign 100-1 may denote a first section and reference sign 100-2 a second section. If the access nodes 100-1 and 100-2 are sections of a single base station, interfaces R12, T12, R22, T22 may be internal interfaces of the base station, e.g. for communication between two processing boards in the same base station rack. In this case, connection of transmission and receiving units R12, T12 with transmission and receiving units T22, R22 (as depicted) may be via the backplane of the base station server rack or via a computer bus if the two sections are located at the same physical location.

In the following, processes according to embodiments of the invention will be described, which may be used in connection with the devices as described above.

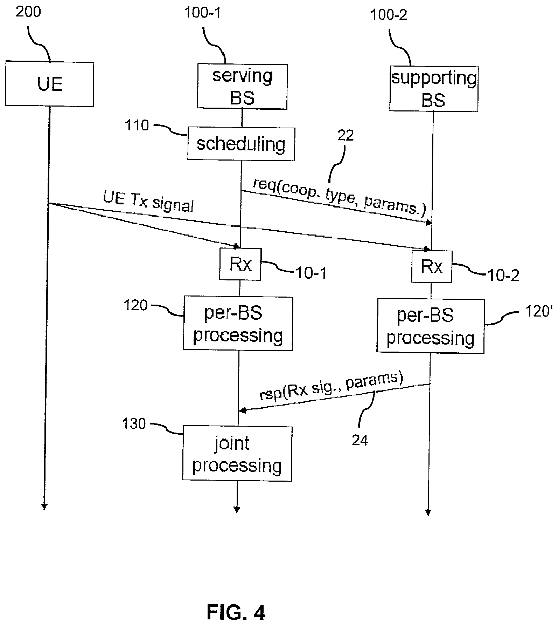

Fig. 4 schematically illustrates a first example of a process of UL cooperation between the first access node 100-1, here depicted as a serving BS, and the supporting access node, here depicted as a serving BS. It is to be understood that the first access node 100-1 and the second access node 100-2 could also be different sections of the same BS or sections of different BSs. Further, it is to be understood that more than one supporting access node 100-2 could be provided.

The UE 200 is associated to the serving BS 100-1. The serving BS 100-1 controls the UE 200 and allocates resources for communication. This may be part of a scheduling step 110. The UE 200 has already been identified as a candidate for UL cooperation. Having allocated certain resource blocks (RBs) to the UE 200, the serving BS 100-1 make a request for support from the supporting BS 100-2 with respect to the particular UE 200, by sending a request message (req) 22 to the supporting BS 100-2. The request 22 message can e.g. indicate which type of information relating to the Rx signal 10-2 is required, e.g., IQ samples, demodulated coded data (soft bits) such as LLRs, decoded user data, such as hard bits, etc. Furthermore, the request message 22 can comprise additional parameters which are required to deliver the requested Rx signal 10-2, e.g., time slots, transmission time intervals (TTIs), and RBs to be received, or parameters for Interference Cancellation (IC) at the supporting BS 100-2. More detailed examples of parameters in the request 22 message are provided below.

On the indicated RBs, the supporting BS 100-2 receives the Rx signal 10-2 from the UE 200, as indicated by reception step 120-2. The Rx signal 10-1 from the UE 200 is received at the serving BS 100-1 in reception step 120-1. Depending on the requested type of information relating to the Rx signal, the supporting BS 100-2 might need to process the Rx signal 10-2 as received from the UE 200, as indicated by per-BS processing step 130-2. Typically, the processing on a per-BS basis in the supporting BS 100-2 will be similar to processing on a per BS basis in the serving BS 100-1, e.g. as performed in a per-BS processing step 130-1. For instance if decoded user data is requested, the supporting BS 100-2 demodulates and decodes the Rx signal 10-2 as received from the UE 200. More detailed examples of processing on a per-BS basis are given below.

After per-BS processing the supporting BS 100-2 responds by sending a response message (rsp) with the requested information, i.e. the Rx signal 10-2 having the type as specified in the request, to the serving BS 100-1. Alternatively, the supporting BS 100-2 may also respond with a related type of information. Additionally, the supporting BS 100-2 can transmit parameters used by the serving BS 100-2, e.g. parameters used for IC at the serving BS 100-2. More detailed examples of information and parameters in the response message 24, which can be used for joint processing at the serving BS 100-1, are given below.

Having received the requested information from the supporting BS 100-2, the serving BS 100-1 can jointly process the Rx signals received by itself and by the supporting BS 100-2. This is accomplished in a joint processing step 130. Depending on the type of the requested Rx signal 10-2, the serving BS 100-1 can, e.g., select the successfully coded bit stream (selection combining), can do soft combining of coded soft bits, or can do interference rejection combining or IC in case of IQ sample exchange. As a result, the serving BS 100-1 determines an optimized signal on the basis of the signals 10-1 and 10-2 received from the terminal 200.

In the above, the cooperation approach is outlined for only one supporting BS 100-2. If the serving BS 100-1 has identified multiple supporting BSs, the presented approach is individually performed for each supporting BS. That is to say, the serving BS 100-1 requests cooperation from each supporting BS. The request messages 22 can be transmitted as unicast message, as multicast message or, depending on the circumstances, even as broadcast message. Each supporting BS responds with the requested information, i.e. the Rx signal having the type as specified in the request. Further, each supporting BS may cancel or disregard the request. The supporting BS 100-2 may also respond not with the requested type of information, but with a related type. For example, the serving BS 100-1 may request decoded bits, but the supporting BS 100-2 may respond with soft values of demodulated bits because the supporting BS 100-2 is not able to decode the Rx signal 10-2, e.g. due to low reception quality or due to a lack of decoding capability. The information of the related type still be helpful in optimizing the signal at the serving BS 100-1. Finally, the joint processing at the serving BS 100-1 combines and processes the Rx signals received at its own antennas and at the supporting nodes.

All parameters or information that are exchanged in the request message 22 or in the response message 24 may be compressed before the actual message exchange and decompressed after the actual message exchange. Here, it is to be noted that compression typically introduces additional time delay, which may be undesirable in some cases.

The presented scheme does not need a central node that controls the procedure. Whenever the serving BS requires support, it requests it from the co-channel BS of choice. As will be further described below, there are several ways to select one or more appropriate supporting BSs.

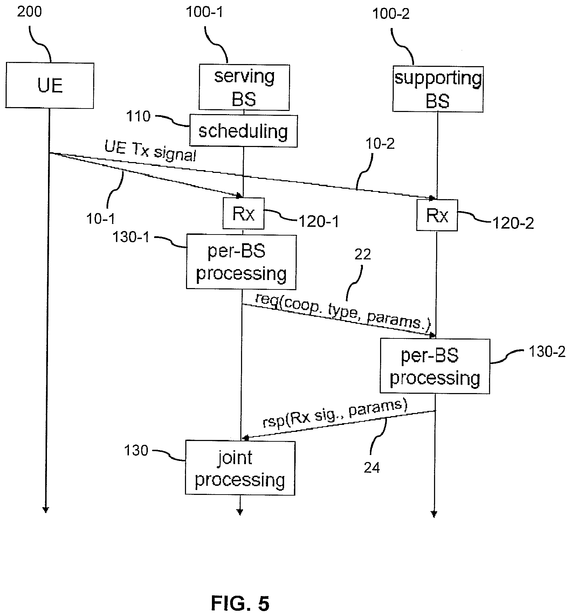

In the process of Fig. 4, cooperation is requested before the serving BS 100-1 performs processing of its own Rx signals 10-1 on a per-BS basis, i.e. before the serving BS 100-1 receives the Rx signal 10-1. As mentioned above, this approach may be referred to as a proactive approach. An alternative approach, which may be referred to as a reactive approach, is used by the process of Fig. 5. In Fig. 5, elements which correspond to those of Fig. 4 have been designated by the same reference signs.

In the process of Fig. 5, which corresponds to the reactive approach, cooperation is requested after per-BS processing at the serving BS 100-1, i.e. after the actual reception of the Rx signal 10-1 at the serving BS 100-1. This may be beneficial, e.g., if the serving BS's 100-1 own decoding attempt failed. Having received the requested information, e.g. the Rx signal 10-2 in the form of IQ samples, from the supporting BS 100-2 or from multiple supporting BSs, the serving BS 100-1 may do a second attempt to decode the Rx signal 10-1 from the UE 200. For this purpose, the Rx signal 10-1 may be stored for a certain time at the serving BS 100-1. Similarly, the Rx signal 10-2 may be stored for a certain time at the supporting BS 100-2. For example, the Rx signal 10-1 and/or the Rx signal 10-2 may be stored for a period from the reception of the Rx signal until the required information has been obtained from the Rx signal 10-1, 10-2. The reactive approach allows for reducing the amount of data to be exchanged between the serving BS 100-1 and the supporting BS 100-2.

The process of cooperation as illustrated in Figs. 4 or 5 may be cancelled by both the supporting BS 100-1 and the serving BS 100-2. For instance, in case of successful decoding at the serving BS 100-1 before the response 24 has been received, the serving BS 100-1 could send a cancel message to the supporting BS 100-2.

The request could be disregarded by the supporting BS 100-2 for several reasons. For example, the supporting BS 100-2 could simply ignore the request or it could send an implicit cancel message. The cancel message could contain the reason of cancellation. The supporting BS 100-2 could disregard the request in the case of, e.g. unsuccessful per-BS processing at the supporting BS 100-2 or saturation of backhaul capacity, i.e. a capacity available for transmitting data from the supporting BS 100-2 to the serving BS 100-1.

By means of the message exchange as described above it is even possible for the serving BS 100-1 to explicitly indicate under which circumstances the request should be disregarded. Several examples of such an indication are possible. According to one example, a signal is received at the supporting BS 100-2 with a higher quality if there are no simultaneous transmissions going on in the supporting BS's 100-2 cell. Thus, a serving BS 100-1 could request cooperation only if there are no simultaneous transmissions on the indicated RBs. This exception may be indicated in the request message 22 or may be pre-configured. According to a further example a priority could indicate how important or valuable the cooperative reception process is.

For example, a "gold user" with an expensive subscription may get a higher priority than a best-effort user with a low cost subscription. In the case that the supporting BS 100-2 receives multiple requests which it cannot process, the supporting BS 100-2 may discard the requests with the lowest priorities.

In accordance with the above concepts, in some embodiments, the supporting BS 100-2 may thus obtain conditional information specifying one or more conditions regarding the obtaining and/or the sending of information relating to the Rx signal 10-2 from the UE 200. The supporting BS may then perform step(s) of obtaining and/or sending of the requested information in conformity with the conditional information. The conditional information may be pre-configured in the supporting BS 100-2, e.g. via Operation and Maintenance (O&M) measures. Alternatively or in addition, the conditional information can be received from the serving BS 100-1. According to one example the conditional information is applicable on a more general scale and more long-term, e.g. as in the above example in which the request may be ignored depending on simultaneous transmissions in the cell of the supporting BS 100-2. According to a further example, however, the conditional information refers to a particular signal or subscriber or particular terminal, e.g. as in the above example of a user having an expensive subscription and a user having a low-cost subscription. In the latter example, it may be advantageous to indicate the conditional information via the request for information relating to the Rx signal, which is sent from the serving 100-1 to the supporting BS 100-2. In other words, the conditional information may be included in the request.

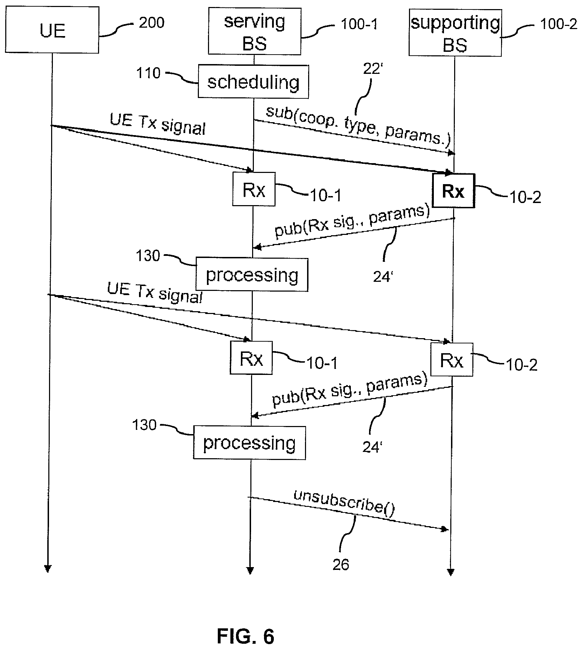

The processes as illustrated in Figs. 4 and 5 are each based on a request-response mechanism, in which the serving BS sends a request message and the supporting BS responds with a response message including the requested information. In some embodiments, the request-response mechanism may be replaced by a subscribe-publish mechanism. A corresponding process is illustrated in Fig. 6.

In the process of Fig. 6, which is based on the subscribe-publish mechanism, a BS 100-2 offers to publish the received Rx signal 10-2 to everyone that has subscribed to that "service". The offer together with capabilities of the BS 100-2, e.g. implemented receiver algorithms, backhaul constraints, number of antennas, etc., may be announced to other BSs directly or to an O&M system of the communication network. An interested serving BS 100-1 subscribes to the offered service, which may e.g. be "IQ sample transfer", and the offering BS 100-2 then becomes a supporting BS 100-2. For this purpose, the serving BS 100-1 sends a subscribe message (sub) 22' to the supporting BS 100-2, and the supporting BS then sends at least one publish message (pub) 24' including the requested information to the serving BS 100-1. The publish message 24' may be sent several times with further, updated information relating to the Rx signal 10-2. Sending of the publish messages 24' may be stopped in response to the serving BS 100-1 sending an unsubscribe message 26 to the supporting BS 100-2. Here it is to be noted that in the process the subscribe message 22' may be regarded as a request for information relating to the Rx signal 10-2.

The subscribe message 22' may contain all relevant information or parameters that are also part of the request message as explained in connection with Figs. 4 and 5. The publish message 24' may contain the Rx signal 10-2, e.g. in the form of IQ samples, as well as additional parameters that are also part of the response message as explained in connection with Figs. 4 and 5.

The subscription of the serving BS 100-1 to the service offered by the supporting BS 100-2 may be cancelled when the information relating to the Rx signal 10-2, e.g. IQ samples, of that particular supporting BS 100-2 are no longer needed. For this purpose, the serving BS 100-1 may send the unsubscribe message 26. Other cancelling procedures may be used as an alternative or in addition.

The subscribe-publish mechanism allows for establishing long-term relationships between BSs with reduced overhead, e.g., for persistent scheduling where RBs are allocated in a sequence of TTIs.

In the following different options of the type of requested information relating to the Rx signal 10-2 at the supporting BS 100-2 will be explained.

According to a first option baseband signals may be requested. In this case, the serving BS 100-1 may request a baseband representation of the Rx signal 10-2 at the supporting BS. For example, the baseband representation may comprise quantized IQ samples per antenna element. In Orthogonal Frequency Division Multiplexing (OFDM) signals or Single Carrier Frequency Division Multiple Access (SC-FDMA) signals, the baseband representation may comprise the output of the Fast-Fourier Transform (FFT) operation performed in the physical layer.

In order to deliver a baseband representation of the Rx signal 10-2 including IQ samples, the supporting BS 100-2 needs to know the time slots (TTIs) and the subcarriers (RBs) for which IQ samples are requested. Both parameters may be contained in the request from the serving BS 100-1, i.e. in the request message 22 or in the subscribe message 22'. As part of the per-BS processing, the supporting BS 100-2 may also remove any known, possibly decoded, signal from its Rx signal 10-2 before the information is forwarded to the serving BS 100-1.

Having received the baseband representation of the Rx signal 10-2, e.g. IQ samples, the serving BS 100-1 can jointly process the Rx signals 10-1, 10-2, e.g., by means of interference rejection combining (IRC) techniques, thereby determining an optimized signal. In some embodiments, multi-user detection (MUD), especially IC, may be used in order to further improve performance. The request from the serving BS 100-1 may also comprise an indicator which type of MUD, e.g. IC, will be performed at the serving BS 100-1.

In order to do IC, the serving BS 100-1 needs to demodulate and decode the interfering co-channel stream (e.g. signal 10-1' of Fig. 3) which was intended to be received at the supporting BS 100-2 (in the exemplary situation of Fig. 3, as signal 10-2'). In some cases, the co-channel stream may also need to be and re-coded and re-modulated. In order to demodulate and decode the interfering co-channel streams, the serving BS 100-1 may need additional information about the used parameters at the transmitter in the UE 200. In the example of an LTE communication network, these parameters are: modulation scheme, code rate, UE-specific scrambling, interleaving and puncturing scheme (rate matching), and redundancy version in the case of retransmissions. For decoding and re-encoding the serving BS 100-1 may need channel state information which it can gather through reference symbols transmitted by the UE 200. Accordingly, in some embodiments UE-specific UL reference symbols as used for the particular transmission are exchanged. In the case of partly overlapping RBs allocations at the serving BS 100-1 and the supporting BS 100-2, the serving BS 100-1 may need IQ samples of all RBs on which the interfering streams were transmitted. In this case, the supporting BS 100-2 will send IQ samples for these RBs as well. As indicated in Figs. 4-6, all additional parameters are inserted in the response from the supporting BS 100-2, i.e. in the response message 24' or in the publish message 24'.

According to a second option, soft values of demodulated bits, also referred to as soft bits, may be requested. The soft values may refer to coded bits or to decoded bits. In this case, the serving BS 100-1 may request soft bits of the Rx signal 10-2 from the UE 200 as received at the supporting BS 100-2. The soft bits are typically quantized constellation points which are output from a demodulator in the physical layer. Further, soft bits may also be available at a convolutional decoder inside a turbo decoder. Normally these soft bits are interleaved and fed back according to the turbo principle; however, these soft bits could also be exchanged with other BSs. In such decoders, a Log-Likelihood Ratio (LLR) representation of the bits is often used. However, other representations of the bits may be used as well.

In order to deliver soft bits, the supporting BS 100-2 may need to know the time slot (TTI) and the subcarriers (RBs) for which soft bits are requested. These parameters may thus be included in the request from the serving BS 100-1, i.e. in the request message 22 or in the subscribe message 22'.

Further, in order to perform demodulation of the Rx signal 10-2, the modulation scheme applied at the UE 200 is needed at the supporting BS 100-2. Before demodulation, equalization may require channel knowledge gained through reference symbols. Hence UE-specific UL reference symbols may be exchanged, e.g. in the request from the serving BS 100-1 to the supporting BS 100-2. In the case of exchanging of turbo decoder soft bits, parameters relating to UE-specific scrambling, interleaving and puncturing scheme (rate matching), and the code rate may be exchanged as well. The above-mentioned parameters may be included in the request from the serving BS 100-1, i.e. in the request message 22 or in the subscribe message 22'.

Having received the requested information from the supporting BS 100-2, the serving BS 100-1 can combine the received soft bits of the supporting BS 100-2 with its own soft bits, thereby determining an optimized signal.

In order to improve demodulation, the supporting BS 100-2 could cancel Rx signals (e.g. the signal 10-2' in Fig.3) of its own UEs, i.e. UEs served by the supporting BS 100-2, before demodulation. This type of IC does not require any additional parameter exchange.

According to a third option decoded bits may be requested. Such decoded bits may be requested as hard bits. In this case, the serving BS 100-1 may request the decoded bits of the UE 200. The decoded hard bits may be output by a decoder in the physical layer. A Cyclic Redundancy Check (CRC) may be performed at the serving BS 100-1 in order to ensure validity of the exchanged decoded bits.

In order to deliver decoded bits, the supporting BS 100-2 may need to know the time slot, e.g.TTI, and the subcarriers, e.g. RBs, for which decoded bits are requested. These parameters may thus be included in the request from the serving BS 100-1, i.e. in the request message 22 or in the subscribe message 22'.

In order to demodulate and decode the Rx signal 10-2 from the UE 200, the supporting BS 100-2 may need additional information on parameters used at the UE 200. In the example of an LTE communication network, these parameters may be: modulation scheme, code rate, UE-specific scrambling, UE-specific UL reference symbols, interleaving and puncturing scheme (rate matching). In case of Hybrid Automatic Repeat Request (HARQ) re-transmissions the redundancy version may be needed as well. Optionally, the serving BS 100-1 could transmit previously received redundancy versions to the supporting BS 100-2. All parameters may be included in the request from the serving BS 100-1, i.e. in the request message 22 or in the subscribe message 22'.

Having received the requested information from the supporting BS 100-2, the serving BS 100-1 can perform selection combining of its own decoded bits with the decoded bits of the supporting BS 100-2, thereby determining an optimized signal.

In order to improve decoding, the supporting BS 100-2 could cancel Rx signals of its own UEs (e.g. the signal 10-2' in Fig.3), i.e. UEs served by the supporting BS 100-2, before demodulation. This type of IC does not require any additional parameter exchange. In the case of multiple requests, the supporting BS 100-2 could successively cancel the Rx signals of already decoded streams in order to improve the decoding of further Rx signals. Parameters required for this type of IC will typically be already included in the request from the serving BS 100-1, i.e. in the request message 22 or in the subscribe message 22'.

In the following processes for selection of supporting BSs according to embodiments of the invention will be further explained.

For cooperative transmission or reception of communication signals, it is desirable to determine which BSs or which BSs should participate as supporting BS. This decision is typically made in the serving BS 100-1, e.g. the BS which has the radio resource control (RRC) signalling connection to the UE 200 or any other kind of particular association to the UE 200.

Before actually selecting one or more supporting BSs, the serving BS 100-1 identifies a UE 200 requiring cooperation. Such a UE 200 may be cell edged and suffer from low carrier strength and/or high co-channel interference. Furthermore, such an UE 200 can have the urgent need to transmit data, e.g., it may have already transmitted a scheduling request or a buffer status report etc. to the serving BS 100-1.

For each UE 200 that requires cooperation, the serving BS 100-1 can compile a set of potentially supporting BSs. For this purpose, it can use a measurement report of the UE 200, which was established for identifying potential handover candidate BSs. Typically, the measurement report will thus show BSs which are potential handover target BSs. However, here the measurement report may also serve to identify BSs whose signals are received within a certain level of quality at the UE 200. Such measurement reports are typically sent in regular intervals to the serving BS 100-1 which can determine the set of potentially cooperating BS therefrom.

For example, the measurement report may indicate BSs having the best wireless channels towards the given UE 200. All the indicated BSs qualifying as potential handover candidates, sometimes referred to as active set, may then be included into a list of potentially supporting BSs. The list of potentially supporting BSs might be - alternatively or in addition- based on location information of BSs, it might be based on the deployment structure and the physical connection of BSs, it might be configured by O&M systems, or it might be pre-configured during system setup.

That list of potentially supporting BSs can be further reduced, i.e. a pre-selection can be carried out, by applying one or more of the following steps and evaluating one or more of the following characteristics:
- Cooperative reception is particularly beneficial when the radio link quality to the supporting BS is close to the link quality to the serving BS. Thus, the difference in signal quality (ΔRSS) between potentially supporting co-channel BSs, denoted by R_{c}, and serving BS, denoted by Rₛ, could serve as one parameter to select supporting BSs. According to some embodiments, the list of candidates is reduced to BSs whose ΔRSS is below a certain threshold ΔRSSₜₕᵣₑₛₕ, i.e. fulfils the relation | Rₛ - R_{c} | < ΔRSSₜₕᵣₑₛₕ.
- BSs may have different limitations with respect to their backhaul transport link, e.g. some may be connected via fibre, others via a wired conncetion (e.g. via E1), some even via a wireless connection, e.g. self-backhauling (e.g. via LTE links). Thus, the backhaul limitation of potentially supporting BSs may serve as parameter to select supporting BSs. According to some embodiments, the list of candidates may thus be reduced to BSs whose backhaul is able to cope with the additional load due to cooperation. The information about the currently available backhaul capacity of certain BSs could be exchanged via a BS-BS interface, e.g. the inter-BS interface X2 according to the 3GPP specifications. For example, this could be accomplished during handovers, or it could be provided by the O&M system. The maximum backhaul capacity, which may be several Gbps for fiber, several hundreds of Mbps for DSL, several tens of Mbps for microwave, or several Mbps for leased lines, could even be preconfigured at system setup.
- The backhaul capacity of the serving BS 100-1 might be a limiting factor as well. The more supporting BSs are cooperating with the serving BS 100-1, the more data has to be received by the serving BS 100-1. Thus, the backhaul limitation of the serving BSs 100-1 may serve as parameter to limit the number of supporting BSs. Accordingly, the list of candidates is limited to the maximum number of BSs that can be handled by the backhaul capacity of the serving BS 100-1.
- Wireless communication protocols typically contain various more or less strict timing constraints regarding, e.g. HARQ and Automatic Repeat Request (ARQ) feedback or re-transmissions, measurements reports, random access, or the like. Cooperative communication has to meet basically the same tight timing constraints. Thus, the latency of the backhaul information exchange can serve as a parameter to select supporting BSs. According to some embodiments, the list of candidates may thus be reduced to BSs whose latency (or the latency of the transport network providing the connection for cooperation) is below a certain limit. A tough limit may lead to a situation in which a given BS only cooperates with co-channel BSs to which it has a direct physical link. The information about the latency could be provided by the O&M system or it could be preconfigured at system setup. In IP networks, the serving BS 100-1 can gather round-trip times, e.g., by sending Internet Control Message Protocol (ICMP) echo request packets to the potentially supporting BS and listening for ICMP "echo response" (also known as "ping"). As an alternative or in addition, the serving BS 100-1 can measure the response time with respect to other BSs during communication via a BS-BS interface, e.g. the inter-BS interface X2 according to the 3GPP specifications. For example, this may be accomplished during handovers.
- If more than one UE requires cooperation the sets of potentially supporting BSs may influence each other. For instance if a co-channel BS is part of two different sets, it might be beneficial to cooperate with this BS for both UEs. In this case, a signalling overhead may be reduced because the exchanged requests and responses, i.e. request messages 22 and response messages 24, or subscribe messages 22' and publish messages 24', may carry information of both UEs at once.
- The exchanged information. e.g. Rx signals, demodulated bits or decoded bits, is typically the more valuable the higher the signal quality during reception at the supporting BS is. For example, the signal quality may be high if there are no simultaneous transmissions going on in the supporting BS's cell. In turn, the signal quality may be low if there are simultaneous transmissions in the supporting BS's cell, which are causing interference to the Rx signal from the UE. The probability of simultaneous transmissions can be approximated by the load of the supporting BS. According to some embodiments, the load of a BS may thus be used as a measure to reduce the set of potentially supporting BSs. All candidate BSs whose cell load is above a certain threshold may be removed from the candidate set. The cell load of co-channel cells could be gathered via a BS-BS interface. Inter-cell interference coordination (ICIC) schemes as specified by 3GPP allow to exchange a cell load indicator, which may be used for reducing the list of potentially supporting BSs as well.

It is to be understood that the order of above-described steps can be modified based on the priorities of vendors/operators or based on the implementation or that only some of the above described steps may be used.

Accordingly, determining a set of one or more BSs potentially suited for obtaining and sending information to the serving BS 100-1 for optimizing the signal at the serving BS 100-1 may be accomplished based on at least one of the following selection criteria:
- a characteristic, e.g. quality, load, and/or latency, of a link from the terminal 200 to the serving BS as compared to a characteristic of a link from the terminal 200 to at least one further BS,
- a characteristic of a link, e.g. quality, load, and/or latency, between the serving BS and at least one further BS,
- a capacity of the serving BS,
- a relation of at least one further BS to the terminal 200 and to at least one further terminal,
- a load of at least one further BS,
- location information of at least one further BS in relation to location information of the serving BS,
- operation and maintenance information related to at least one further BS, and
- pre-configuration information related to at least one further BS.

Information relating to the above-mentioned criteria may be sent from further BSs, which are potentially suited as supporting BS, to the serving BS 100-1.

Having compiled the final set of potentially cooperating BSs, the serving BS requests 100-1 cooperation from all BSs of that set. The message exchange, according to the request-response mechanism or according to the publish-subscribe mechanism, is performed for each of the supporting BSs individually. However, it is to be understood, that unicast messages, multicast messages and/or broadcast messages may be used as appropriate in order to efficiently use network capacities.

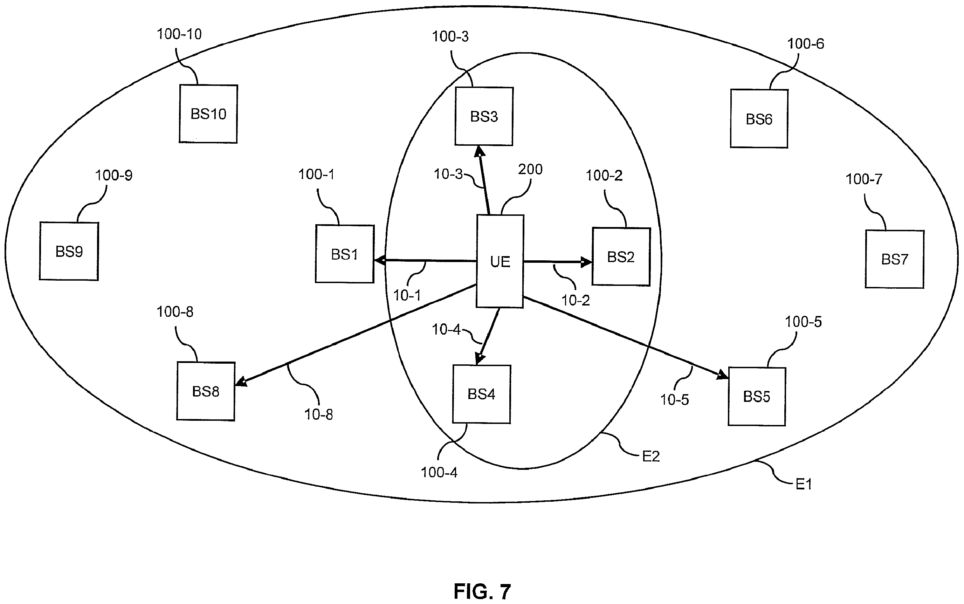

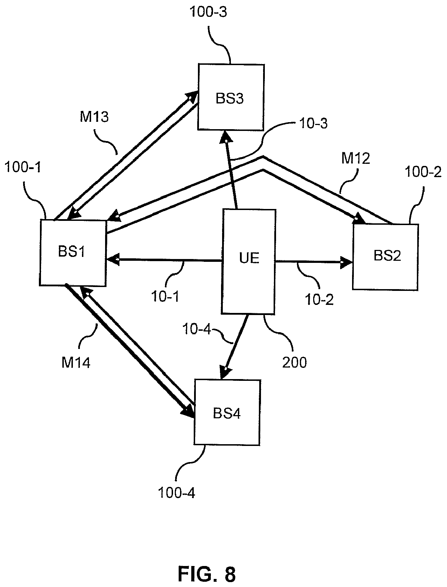

The above concepts of selecting cooperating BSs are further illustrated in Figs. 7 and 8.

Fig. 7 depicts an ensemble E1 of access nodes 100-1, 100-2, 100-3, 100-4, 100-5, 100-6, 100- 7, 100-8, 100-9, 100-10 or BSs (BS1-BS10) of a communication network. Access node 100-1 is the serving access node for terminal 200. The Tx signal of the terminal 200 is received at access nodes 100-1, 100-2, 100-3, 100-4, 100-5, and 100-8, i.e. at BS1-BS5 and BS8. The serving access node 100-1 can determine a set E2 of one or more access nodes of the ensemble E1 that are potentially suited for supporting the serving access node 100-1. According to the example, the serving access node 100-1 selects the access nodes 100-2, 100-3, and 100-4, i.e. BS2-BS4, for the set E2 and excludes the remaining access nodes, 100-5, 100-6, 100-7, 100-8, 100-9, 100-10, i.e. BS5-BS10. For example, this decision may be based on knowing the location of the terminal 200 which might be too distant from any of the remaining access nodes for receiving of a signal from the terminal 200 at all or at acceptable quality. In Fig. 8, exchanged messages M12, M13, and M14 exchanged between the serving access node 100-1 and the supporting access nodes 100-2, 100-3, and 100-4, respectively, of set E2 are shown. As mentioned above the exchanged messages may be request messages and response messages or subscribe messages and publish messages, and have the purpose of requesting and receiving information relating to a signal received from the terminal 200 at the respective access node 100-2, 100-3, and 100-4 of set E2. It is to be understood that the situation as illustrated in Figs. 7 and 8 is merely exemplary. As compared to the illustrated situation, in which the set E2 consists of three access nodes, other situations may have only one access node, two access nodes, or more than three access nodes in the set E2. Also, it is to be understood that the total number of access nodes in the communication network may be different.

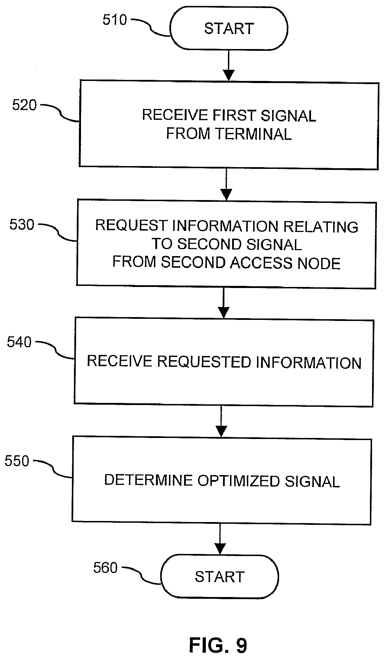

Fig. 9 shows a flowchart for illustrating a method in accordance with the concepts as explained above. The method of Fig. 9 comprises steps to be performed by the serving access node.

The method starts at step 510.

At step 520, a first signal, e.g. the signal 10-1, is received from a terminal, e.g. the terminal 200, at a first access node, e.g. the first access node 100-1. The first signal as received at the first access node may then be subjected to per-access node processing in the first access node.

At step 530, the first access node sends a request to a second access node, e.g. the access nodes 100-2. As explained above, the request may be in the form of a request message or in the form of a subscribe message. In the request, information relating to a second signal, e.g. the signal 10-2, received from the terminal at the second access node is requested, e.g. IQ samples of the Rx signal, soft values of demodulated bits of the Rx signal, and/or decoded bits of the Rx signal.

At step 540, the first access node receives the requested information from the second access node, e.g. in a response message or in a publish message.

At step 550, the first access node determines an optimized signal based on the received information from the second access node and on the basis of information relating to the first signal as received by the first access node. As explained above, this may involve joint processing of the information relating to the first signal and the information relating to the second signal, e.g. selection combining, IC, or the like.

The method ends at step 560.

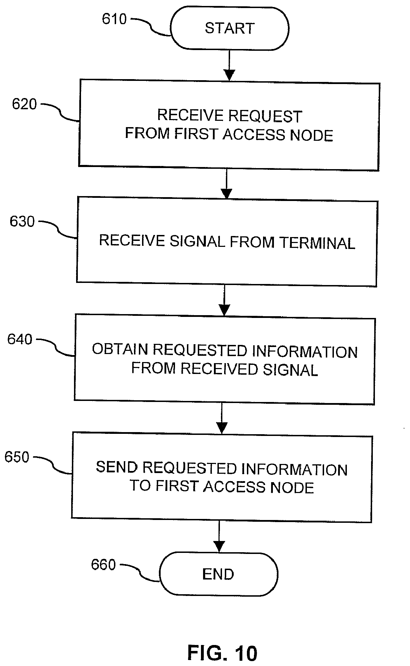

Fig. 10 shows a flowchart for illustrating a method in accordance with the concepts as explained above. The method of Fig. 10 comprises steps to be performed by a supporting access node.

The method starts at step 610.

At step 620, a request from a first access node, e.g. the first access node 100-1, is received by a second access node, e.g. the second access node 100-2. As explained above, the request may be in the form of a request message or in the form of a subscribe message. In the request, information relating to a signal, e.g. the signal 10-2, received from the terminal at the second access node is requested, e.g. IQ samples of the Rx signal, soft values of demodulated bits of the Rx signal, and/or decoded bits of the Rx signal.

At step 630, the second access node receives the signal from the terminal. In some embodiments, the signal may also be received prior to receiving the request. In such cases, the received signal may be stored by the second access node.

At step 640, the second access node obtains the requested information from the received signal.

At step 650, the second access node sends the requested information to the first access node, e.g. in a response message or in a publish message.

The method ends at step 660.

The concepts as explained above enable an access node, e.g. a serving BS, to request Rx signals for a UE from one ore more further access nodes, e.g. supporting BSs. Rx signals can have an arbitrary type, e.g., IQ samples, uncoded soft bits, coded hard bits, or the like.

The concepts allow for dynamic, on-demand grouping of cooperating access nodes or BSs in a selective manner. The concepts provide an on-demand collection of specified Rx information from selected supporting access nodes or BSs by using a request-response mechanism or a publish-subscribe mechanism. Additional parameters as required for IC may be exchanged in an efficient manner. Moreover, the concepts allow for operating under distributed control without requiring a central controlling node.

According to some embodiments of the invention, an algorithm of selecting potential supporting access nodes or BSs may be provided. The access node or BS selection algorithm as described above allows for optimizing the process of cooperation with regards to various requirements and constraints such as the transmission infrastructure, the network load, deployment density, channel conditions or the like.

The above concepts involve methods of distributed control which may rely on local information on an as-needed basis. Accordingly the amount signalling information as well as the signalling distance of information forwarded and used for enhanced decoding performance in the UL direction may be reduced.

Finally, the above concepts allow for integrating the information exchange into the regular BS UL scheduling as defined by 3GPP LTE. Cooperative and non-cooperative transmissions can take place simultaneously.

It is to be understood that the above concepts, examples and embodiments are merely illustrative and are susceptible to various modifications. For example, in the above-described methods and processes, steps or procedures may be executed according to the order as described or in a different order. Further, it is also possible to omit certain steps or procedures without departing from the scope of the present disclosure. Moreover, individual features of different examples or embodiments may be combined with each other as appropriate.

## Claims

1. A method for optimizing a signal received from a terminal (200) of a communication network comprising a plurality of access nodes (100-1, 100-2, 100-3, 100-4, 100-5, 100-6, 100-7, 100-8, 100-9, 100-10), wherein the terminal (200) is associated with a first access node (100-1) of the access nodes (100-1, 100-2, 100-3, 100-4, 100-5, 100-6, 100-7, 100-8, 100-9, 100-10), the method comprising the following steps performed by the first access node (100-1):
- receiving a first signal (10-1) from the terminal (200),
- sending a request (22; 22') to a second access node (100-2, 100-3, 100-4) of the access nodes (100-1, 100-2, 100-3, 100-4, 100-5, 100-6, 100-7, 100-8, 100-9, 100-10) for requesting information relating to a second signal (10-2, 10-3, 10-4) received from the terminal (200) at the second access node (100-2, 100-3, 100-4),
- receiving the requested information (24; 24'),
- determining the optimized signal based on the received information and information relating to the first signal (10-1), and
- determining a set (E2) of one or more of the access nodes (100-2, 100-3, 100-4, 100-5, 100-6, 100-7, 100-8, 100-9, 100-10) potentially suited for obtaining and sending information to the first access node (100-1) for optimizing the signal at the first access node (100-1), the set (E2) comprising at least a second access node (100-2, 100-3, 100-4) and being determined based on at least one of the following selection criteria:
- a characteristic of a link from the terminal (200) to the first access node (100-1) compared to a characteristic of a link from the terminal (200) to at least one further of the access nodes (100-1, 100-2, 100-3, 100-4, 100-5, 100-6, 100-7, 100-8, 100-9, 100-10),
- a characteristic of a link between the first access node (100-1) and at least one further of the access nodes (100-1, 100-2, 100-3, 100-4, 100-5, 100-6, 100-7, 100-8, 100-9, 100-10),
- a capacity of the first access node (100-1),
- a relation of at least one further of the access nodes (100-1, 100-2, 100-3, 100-4, 100-5, 100-6, 100-7, 100-8, 100-9, 100-10) to the terminal (200) and to at least one further terminal (200'),
- a load of at least one further of the access nodes (100-1, 100-2, 100-3, 100-4, 100-5, 100-6, 100-7, 100-8, 100-9, 100-10),
- location information of at least one further of the access nodes (100-1, 100-2, 100-3, 100-4, 100-5, 100-6, 100-7, 100-8, 100-9, 100-10) in relation to location information of the first access node (100-1),
- operation and maintenance information related to at least one further of the access nodes (100-1, 100-2, 100-3, 100-4, 100-5, 100-6, 100-7, 100-8, 100-9, 100-10), and
- pre-configuration information related to at least one further of the access nodes (100-1, 100-2, 100-3, 100-4, 100-5, 100-6, 100-7, 100-8, 100-9, 100-10).

2. The method according to claim 1, wherein the request (22; 22') comprises information identifying a type of requested information and/or one or more parameters for specifying dedicated information relating to the second signal (10-2, 10-3, 10-4).

3. The method according to claim 1 or 2, further comprising the step of:
- receiving from the second access node (100-2) information relating to a signal (10-2') from a further terminal (200'),
wherein the step of determining the optimized signal is further based on the received information relating to the signal (10-2') from the further terminal (200').

4. The method according to any of the preceding claims, wherein the request (22') comprises information for triggering the second access node (100-2, 100-3, 100-4) to send at least one further information relating to at least one further second signal (10-2, 10-3, 10-4) received subsequent to the second signal (10-2, 10-3, 10-4) from the terminal (200) at the second access node (100-2, 100-3, 100-4) and wherein the first access node (100-1) determines at least one further optimized signal based on the received at least one further information and information relating to at least one further first signal (10-1) received subsequent to the first signal (10-1) from the terminal (200) at the first access node (100-1).

5. The method according to any of the preceding claims, further comprising the steps of:
- obtaining conditional information for specifying one or more conditions regarding the obtaining and/or the sending of the information relating to the second signal (10-2, 10-3, 10-4) from the terminal (200), and
- sending the conditional information to the second access node (100-2, 100-3, 100-4).

6. A method for optimizing a signal received from a terminal (200) of a communication network comprising a plurality of access nodes (100-1, 100-2, 100-3, 100-4, 100-5, 100-6, 100-7, 100-8, 100-9, 100-10), wherein the terminal (200) is associated with a first access node (100-1) of the access nodes (100-1, 100-2, 100-3, 100-4, 100-5, 100-6, 100-7, 100-8, 100-9, 100-10), the method comprising the following steps performed by a second access node (100-2, 100-3, 100-4) of the access nodes (100-1, 100-2, 100-3, 100-4, 100-5, 100-6, 100-7, 100-8, 100-9, 100-10):
- receiving a request (22; 22') from the first access node (100-1), the request (22; 22') requesting information relating to a signal (10-2, 10-3, 10-4) received from the terminal at the second access node (100-2, 100-3, 100-4),
- receiving the signal (10-2, 10-3, 10-4) from the terminal (200),
- obtaining the requested information from the received signal (10-2, 10-3, 10-4),
- sending the requested information to the first access node (100-1), and
- sending from the second access node (100-2, 100-3, 100-4) to the first access node information suited for enabling the first access node (100-1) to determine if the second access node (100-2, 100-3, 100-4) is potentially suited for obtaining and sending information to the first access node (100-1) for optimizing the signal at the first access node (100-1), wherein the information suited for enabling the first access node (100-1) indicates at least one of:
- a characteristic of a link from the terminal (200) to the second access node (100-2, 100-3, 100-4),
- a characteristic of a link between the first access (100-1) node and the second access node (100-2, 100-3, 100-4),
- a relation of the second access node (100-2, 100-3, 100-4) to the terminal (200) and at least one further terminal (200'),
- a load of the second access node (100-2, 100-3, 100-4),
- location information of the second access node (100-2, 100-3, 100-4),
- operation and maintenance information related to the second access node (100-2, 100-3, 100-4), and
- pre-configuration information related to the second access node (100-2, 100-3, 100-4).

7. The method according to claim 6, wherein the request (22; 22') comprises information identifying a type of requested information and/or one or more parameters for specifying dedicated information relating to the signal and wherein the requested information is obtained in accordance with the identified type or the specified dedicated information, respectively.

8. The method according to claim 6 or 7, wherein the request (22') comprises information for triggering the second access node (100-2, 100-3, 100-4) to send at least one further information relating to at least one further signal (10-2, 10-3, 10-4) received subsequent to the signal (10-2, 10-3, 10-4) from the terminal (200) at the second access node (100-2, 100-3, 100-4) and wherein the second access node (100-2, 100-3, 100-4) receives the at least one further signal (10-2, 10-3, 10-4) from the terminal (200), obtains the requested at least one further information from the at least one received further signal (10-2, 10-3, 10-4), and sends the requested at least one further information to the first access node (100-1).

9. The method according to any of the claims 6 to 8, further comprising the steps of
- determining information relating to a signal (10-2') from a further terminal (200'), and
- sending the obtained information to the first access node (100-1).

10. The method according to any of the claims 6 to 9, further comprising the steps of:
- obtaining conditional information for specifying one or more conditions regarding the obtaining and/or the sending of the information relating to the second signal (10-2, 10-3, 10-4) from the terminal (200),
- executing the obtaining and/or the sending in conformity with the specified one or more conditions.

11. A first access node (100-1) for optimizing a signal received from a terminal (200) of a communication network comprising a plurality of access nodes (100-1, 100-2, 100-3, 100-4, 100-5, 100-6, 100-7, 100-8, 100-9, 100-10), wherein the terminal (200) is associated with the first access node (100-1) of the access nodes (100-1, 100-2, 100-3, 100-4, 100-5, 100-6, 100-7, 100-8, 100-9, 100-10), wherein the first access node (100-1) is adapted to
- receive a first signal (10-1) from the terminal (200),
- send a request (22; 22') to a second access node (100-2, 100-3, 100-4) of the access nodes (100-1, 100-2, 100-3, 100-4, 100-5, 100-6, 100-7, 100-8, 100-9, 100-10) for requesting information relating to a second signal (10-2, 10-3, 10-4) received from the terminal (200) at the second access node (100-2, 100-3, 100-4),
- receive the requested information (24; 24'),
- determine the optimized signal based on the received information and information relating to the first signal (10-1), and
- determine a set (E2) of one or more of the access nodes (100-2, 100-3, 100-4, 100-5, 100-6, 100-7, 100-8, 100-9, 100-10) potentially suited for obtaining and sending information to the first access node (100-1) for optimizing the signal at the first access node (100-1), the set (E2) comprising at least a second access node (100-2, 100-3, 100-4) and being determined based on at least one of the following selection criteria:
- a characteristic of a link from the terminal (200) to the first access node (100-1) compared to a characteristic of a link from the terminal (200) to at least one further of the access nodes (100-1, 100-2, 100-3, 100-4, 100-5, 100-6, 100-7, 100-8, 100-9, 100-10),
- a characteristic of a link between the first access node (100-1) and at least one further of the access nodes (100-1, 100-2, 100-3, 100-4, 100-5, 100-6, 100-7, 100-8, 100-9, 100-10),
- a capacity of the first access node (100-1),
- a relation of at least one further of the access nodes (100-1, 100-2, 100-3, 100-4, 100-5, 100-6, 100-7, 100-8, 100-9, 100-10) to the terminal (200) and to at least one further terminal (200'),
- a load of at least one further of the access nodes (100-1, 100-2, 100-3, 100-4, 100-5, 100-6, 100-7, 100-8, 100-9, 100-10),
- location information of at least one further of the access nodes (100-1, 100-2, 100-3, 100-4, 100-5, 100-6, 100-7, 100-8, 100-9, 100-10) in relation to location information of the first access node (100-1),
- operation and maintenance information related to at least one further of the access nodes (100-1, 100-2, 100-3, 100-4, 100-5, 100-6, 100-7, 100-8, 100-9, 100-10), and
- pre-configuration information related to at least one further of the access nodes (100-1, 100-2, 100-3, 100-4, 100-5, 100-6, 100-7, 100-8, 100-9, 100-10).

12. The first access node according to claim 11, wherein the first access node is adapted to perform the steps of a method according to claims 2 to 5.

13. A second access node (100-2, 100-3, 100-4) for optimizing a signal received from a terminal (200) of a communication network comprising a plurality of access nodes (100-1, 100-2, 100-3, 100-4, 100-5, 100-6, 100-7, 100-8, 100-9, 100-10), wherein the terminal (200) is associated with a first access node (100-1) of the access nodes (100-1, 100-2, 100-3, 100-4, 100-5, 100-6, 100-7, 100-8, 100-9, 100-10), wherein the second access node (100-2, 100-3, 100-4) of the access nodes (100-1, 100-2, 100-3, 100-4, 100-5, 100-6, 100-7, 100-8, 100-9, 100-10) is adapted to:
- receive a request (22; 22') from the first access node (100-1), the request (22; 22') requesting information relating to a signal (10-2, 10-3, 10-4) received from the terminal at the second access node (100-2, 100-3, 100-4),
- receive the signal (10-2, 10-3, 10-4) from the terminal (200),
- obtain the requested information from the received signal (10-2, 10-3, 10-4),
- send the requested information to the first access node (100-1), and
- send to the first access node information suited for enabling the first access node (100-1) to determine if the second access node (100-2, 100-3, 100-4) is potentially suited for obtaining and sending information to the first access node (100-1) for optimizing the signal at the first access node (100-1), wherein the information suited for enabling the first access node (100-1) indicates at least one of:
- a characteristic of a link from the terminal (200) to the second access node (100-2, 100-3, 100-4),
- a characteristic of a link between the first access (100-1) node and the second access node (100-2, 100-3, 100-4),
- a relation of the second access node (100-2, 100-3, 100-4) to the terminal (200) and at least one further terminal (200'),
- a load of the second access node (100-2, 100-3, 100-4),
- location information of the second access node (100-2, 100-3, 100-4),
- operation and maintenance information related to the second access node (100-2, 100-3, 100-4), and
- pre-configuration information related to the second access node (100-2, 100-3, 100-4).

14. The second access node according to claim 13, wherein the second access node is adapted to perform the steps of a method according to claims 7 to 10.

15. A communication network comprising a first access node according to claim 11 or 12 and a second access node according to claim 13 or 14.

## Patentansprüche

1. Verfahren zur Optimierung eines Signals, das von einem Endgerät (200) eines Kommunikationsnetzwerks empfangen wird, das eine Mehrzahl von Zugangsknoten (100-1, 100-2, 100-3, 100-4, 100-5, 100-6, 100-7, 100-8, 100-9, 100-10) umfasst, wobei das Endgerät (200) mit einem ersten Zugangsknoten (100-1) der Zugangsknoten (100-1, 100-2, 100-3, 100-4, 100-5, 100-6, 100-7, 100-8, 100-9, 100-10) assoziiert ist, und das Verfahren die folgenden Schritte umfasst, die vom ersten Zugangsknoten (100-1) ausgeführt werden:
- Empfangen eines ersten Signals (10-1) vom Endgerät (200),
- Senden einer Anforderung (22; 22') an einen zweiten Zugangsknoten (100-2, 100-3, 100-4) der Zugangsknoten (100-1, 100-2, 100-3, 100-4, 100-5, 100-6, 100-7, 100-8, 100-9, 100-10) zum Anfordern von Informationen in Bezug auf ein zweites Signal (10-2, 10-3, 10-4), das vom Endgerät (200) am zweiten Zugangsknoten (100-2, 100-3, 100-4) empfangen wird,
- Empfangen der angeforderten Informationen (24; 24'),
- Bestimmen des optimierten Signals basierend auf den empfangenen Informationen und Informationen in Bezug auf das erste Signal (10-1), und
- Bestimmen eines Satzes (E2) eines oder mehrerer der Zugangsknoten (100-2, 100-3, 100-4, 100-5, 100-6, 100-7, 100-8, 100-9, 100-10), die potenziell zum Erhalten und Senden von Informationen an den ersten Zugangsknoten (100-1) zum Optimieren des Signals am ersten Zugangsknoten (100-1) geeignet sind, wobei der Satz (E2) mindestens einen zweiten Zugangsknoten (100-2, 100-3, 100-4) umfasst und basierend auf mindestens einem der folgenden Auswahlkriterien bestimmt wird:
- einer Charakteristik einer Verbindungsstrecke vom Endgerät (200) zum ersten Zugangsknoten (100-1) im Vergleich zu einer Charakteristik einer Verbindungsstrecke vom Endgerät (200) zu mindestens einem weiteren der Zugangsknoten (100-1, 100-2, 100-3, 100-4, 100-5, 100-6, 100-7, 100-8, 100-9, 100-10),
- einer Charakteristik einer Verbindungsstrecke zwischen dem ersten Zugangsknoten (100-1) und mindestens einem weiteren der Zugangsknoten (100-1, 100-2, 100-3, 100-4, 100-5, 100-6, 100-7, 100-8, 100-9, 100-10),
- einer Kapazität des ersten Zugangsknotens (100-1),
- einer Beziehung mindestens eines weiteren der Zugangsknoten (100-1, 100-2, 100-3, 100-4, 100-5, 100-6, 100-7, 100-8, 100-9, 100-10) zum Endgerät (200) und zu mindestens einem weiteren Endgerät (200'),
- einer Last mindestens eines weiteren der Zugangsknoten (100-1, 100-2, 100-3, 100-4, 100-5, 100-6, 100-7, 100-8, 100-9, 100-10),
- Standortinformationen mindestens eines weiteren der Zugangsknoten (100-1, 100-2, 100-3, 100-4, 100-5, 100-6, 100-7, 100-8, 100-9, 100-10) in Bezug auf Standortinformationen des ersten Zugangsknotens (100-1),
- Betriebs- und Wartungsinformationen in Bezug auf mindestens einen weiteren der Zugangsknoten (100-1, 100-2, 100-3, 100-4, 100-5, 100-6, 100-7, 100-8, 100-9, 100-10) und
- Vorkonfigurationsinformationen in Bezug auf mindestens einen weiteren der Zugangsknoten (100-1, 100-2, 100-3, 100-4, 100-5, 100-6, 100-7, 100-8, 100-9, 100-10).

2. Verfahren nach Anspruch 1, wobei die Anforderung (22; 22') Informationen, die einen Typ von angeforderten Informationen identifizieren, und einen oder mehrere Parameter zum Spezifizieren dedizierter Informationen in Bezug auf das zweite Signal (10-2, 10-3, 10-4) umfasst.

3. Verfahren nach Anspruch 1 oder 2, ferner umfassend den folgenden Schritt:
- Empfangen vom zweiten Zugangsknoten (100-2) von Informationen in Bezug auf ein Signal (10-2') von einem weiteren Endgerät (200'),
wobei der Schritt des Bestimmens des optimierten Signals ferner auf den empfangenen Informationen in Bezug auf das Signal (10-2') vom weiteren Endgerät (200') basiert.

4. Verfahren nach einem der vorhergehenden Ansprüche, wobei die Anforderung (22') Informationen zum Auslösen des zweiten Zugangsknotens (100-2, 100-3, 100-4) umfasst, um mindestens eine weitere Information in Bezug auf mindestens ein weiteres zweites Signal (10-2, 10-3, 10-4) zu senden, das nach dem zweiten Signal (10-2, 10-3, 10-4) vom Endgerät (200) am zweiten Zugangsknoten (100-2, 100-3, 100-4) empfangen wird, und wobei der erste Zugangsknoten (100-1) mindestens ein weiteres optimiertes Signal basierend auf der empfangenen mindestens einen weiteren Information und Informationen in Bezug auf mindestens ein weiteres erstes Signal (10-1) bestimmt, das nach dem ersten Signal (10-1) vom Endgerät (200) am ersten Zugangsknoten (100-1) empfangen wird.

5. Verfahren nach einem der vorhergehenden Ansprüche, ferner umfassend die folgenden Schritte:
- Erhalten von Bedingungsinformationen zum Spezifizieren einer oder mehrerer Bedingungen hinsichtlich des Erhaltens und/oder Sendens der Informationen in Bezug auf das zweite Signal (10-2, 10-3, 10-4) vom Endgerät (200), und
- Senden der Bedingungsinformationen an den zweiten Zugangsknoten (100-2, 100-3, 100-4).

6. Verfahren zur Optimierung eines Signals, das von einem Endgerät (200) eines Kommunikationsnetzwerks empfangen wird, das eine Mehrzahl von Zugangsknoten (100-1, 100-2, 100-3, 100-4, 100-5, 100-6, 100-7, 100-8, 100-9, 100-10) umfasst, wobei das Endgerät (200) mit einem ersten Zugangsknoten (100-1) der Zugangsknoten (100-1, 100-2, 100-3, 100-4, 100-5, 100-6, 100-7, 100-8, 100-9, 100-10) assoziiert ist, und das Verfahren die folgenden Schritte umfasst, die von einem zweiten Zugangsknoten (100-2, 100-3, 100-4) der Zugangsknoten (100-1, 100-2, 100-3, 100-4, 100-5, 100-6, 100-7, 100-8, 100-9, 100-10) ausgeführt werden:
- Empfangen einer Anforderung (22; 22') vom ersten Zugangsknoten (100-1), wobei die Anforderung (22; 22') Informationen in Bezug auf ein Signal (10-2, 10-3, 10-4) anfordert, das vom Endgerät am zweiten Zugangsknoten (100-2, 100-3, 100-4) empfangen wird,
- Empfangen des Signals (10-2, 10-3, 10-4) vom Endgerät (200),
- Erhalten der angeforderten Informationen vom empfangenen Signal (10-2, 10-3, 10-4),
- Senden der angeforderten Informationen an den ersten Zugangsknoten (100-1), und
- Senden von Informationen vom zweiten Zugangsknoten (100-2, 100-3, 100-4) an den ersten Zugangsknoten, die geeignet sind, um den ersten Zugangsknoten (100-1) zum Bestimmen zu befähigen, ob der zweite Zugangsknoten (100-2, 100-3, 100-4) potenziell zum Erhalten und Senden von Informationen an den ersten Zugangsknoten (100-1) zum Optimieren des Signals am ersten Zugangsknoten (100-1) geeignet ist, wobei die Informationen, die zum Befähigen des ersten Zugangsknotens (100-1) geeignet sind, mindestens eine anzeigen von:
- einer Charakteristik einer Verbindungsstrecke vom Endgerät (200) zum zweiten Zugangsknoten (100-2, 100-3, 100-4),
- einer Charakteristik einer Verbindungsstrecke zwischen dem ersten Zugangsknoten (100-1) und dem zweiten Zugangsknoten (100-2, 100-3, 100-4),
- einer Beziehung des zweiten Zugangsknotens (100-2, 100-3, 100-4) zum Endgerät (200) und mindestens einem weiteren Endgerät (200'),
- einer Last des zweiten Zugangsknotens (100-2, 100-3, 100-4),
- Standortinformationen des zweiten Zugangsknotens (100-2, 100-3, 100-4),
- Betriebs- und Wartungsinformationen in Bezug auf den zweiten Zugangsknoten (100-2, 100-3, 100-4) und
- Vorkonfigurationsinformationen in Bezug auf den zweiten Zugangsknoten (100-2, 100-3, 100-4).

7. Verfahren nach Anspruch 6, wobei die Anforderung (22; 22') Informationen, die einen Typ von angeforderten Informationen identifizieren, und einen oder mehrere Parameter zum Spezifizieren dedizierter Informationen in Bezug auf das zweite Signal (10-2, 10-3, 10-4) umfasst, und wobei die angeforderten Informationen gemäß dem identifizierten Typ bzw. den spezifizierten dedizierten Informationen erhalten werden.

8. Verfahren nach Anspruch 6 oder 7, wobei die Anforderung (22') Informationen zum Auslösen des zweiten Zugangsknotens (100-2, 100-3, 100-4) umfasst, um mindestens eine weitere Information in Bezug auf mindestens ein weiteres Signal (10-2, 10-3, 10-4) zu senden, das nach dem Signal (10-2, 10-3, 10-4) vom Endgerät (200) am zweiten Zugangsknoten (100-2, 100-3, 100-4) empfangen wird, und wobei der zweite Zugangsknoten (100-2, 100-3, 100-4) das mindestens eine weitere Signal (10-2, 10-3, 10-4) vom Endgerät empfängt, die angeforderte mindestens eine weitere Information von dem mindestens einen empfangenen weiteren Signal (10-2, 10-3, 10-4) erhält, und die angeforderte mindestens eine weitere Information an den ersten Zugangsknoten (100-1) sendet.

9. Verfahren nach einem der Ansprüche 6 bis 8, ferner umfassend die folgenden Schritte:
- Bestimmen von Informationen in Bezug auf ein Signal (10-2') von einem weiteren Endgerät (200'), und
- Senden der erhaltenen Informationen an den ersten Zugangsknoten (100-1).

10. Verfahren nach einem der Ansprüche 6 bis 9, ferner umfassend die folgenden Schritte:
- Erhalten von Bedingungsinformationen zum Spezifizieren einer oder mehrerer Bedingungen hinsichtlich des Erhaltens und/oder Sendens der Informationen in Bezug auf das zweite Signal (10-2, 10-3, 10-4) vom Endgerät (200),
- Ausführen des Erhaltens und/oder des Sendens in Übereinstimmung mit der einen oder den mehreren spezifizierten Bedingungen.

11. Erster Zugangsknoten (100-1) zum Optimieren eines Signals, das von einem Endgerät (200) eines Kommunikationsnetzwerks empfangen wird, das eine Mehrzahl von Zugangsknoten (100-1, 100-2, 100-3, 100-4, 100-5, 100-6, 100-7, 100-8, 100-9, 100-10) umfasst, wobei das Endgerät (200) mit dem ersten Zugangsknoten (100-1) der Zugangsknoten (100-1, 100-2, 100-3, 100-4, 100-5, 100-6, 100-7, 100-8, 100-9, 100-10) assoziiert ist, wobei der erste Zugangsknoten (100-1) ausgelegt ist zum:
- Empfangen eines ersten Signals (10-1) vom Endgerät (200),
- Senden einer Anforderung (22; 22') an einen zweiten Zugangsknoten (100-2, 100-3, 100-4) der Zugangsknoten (100-1, 100-2, 100-3, 100-4, 100-5, 100-6, 100-7, 100-8, 100-9, 100-10) zum Anfordern von Informationen in Bezug auf ein zweites Signal (10-2, 10-3, 10-4), das vom Endgerät (200) am zweiten Zugangsknoten (100-2, 100-3, 100-4) empfangen wird,
- Empfangen der angeforderten Informationen (24; 24'),
- Bestimmen des optimierten Signals basierend auf den empfangenen Informationen und Informationen in Bezug auf das erste Signal (10-1), und
- Bestimmen eines Satzes (E2) eines oder mehrerer der Zugangsknoten (100-2, 100-3, 100-4, 100-5, 100-6, 100-7, 100-8, 100-9, 100-10), die potenziell zum Erhalten und Senden von Informationen an den ersten Zugangsknoten (100-1) zum Optimieren des Signals am ersten Zugangsknoten (100-1) geeignet sind, wobei der Satz (E2) mindestens einen zweiten Zugangsknoten (100-2, 100-3, 100-4) umfasst und basierend auf mindestens einem der folgenden Auswahlkriterien bestimmt wird:
- einer Charakteristik einer Verbindungsstrecke vom Endgerät (200) zum ersten Zugangsknoten (100-1) im Vergleich zu einer Charakteristik einer Verbindungsstrecke vom Endgerät (200) zu mindestens einem weiteren der Zugangsknoten (100-1, 100-2, 100-3, 100-4, 100-5, 100-6, 100-7, 100-8, 100-9, 100-10),
- einer Charakteristik einer Verbindungsstrecke zwischen dem ersten Zugangsknoten (100-1) und mindestens einem weiteren der Zugangsknoten (100-1, 100-2, 100-3, 100-4, 100-5, 100-6, 100-7, 100-8, 100-9, 100-10),
- einer Kapazität des ersten Zugangsknotens (100-1),
- einer Beziehung mindestens eines weiteren der Zugangsknoten (100-1, 100-2, 100-3, 100-4, 100-5, 100-6, 100-7, 100-8, 100-9, 100-10) zum Endgerät (200) und zu mindestens einem weiteren Endgerät (200'),
- einer Last mindestens eines weiteren der Zugangsknoten (100-1, 100-2, 100-3, 100-4, 100-5, 100-6, 100-7, 100-8, 100-9, 100-10),
- Standortinformationen mindestens eines weiteren der Zugangsknoten (100-1, 100-2, 100-3, 100-4, 100-5, 100-6, 100-7, 100-8, 100-9, 100-10) in Bezug auf Standortinformationen des ersten Zugangsknotens (100-1),
- Betriebs- und Wartungsinformationen in Bezug auf mindestens einen weiteren der Zugangsknoten (100-1, 100-2, 100-3, 100-4, 100-5, 100-6, 100-7, 100-8, 100-9, 100-10) und
- Vorkonfigurationsinformationen in Bezug auf mindestens einen weiteren der Zugangsknoten (100-1, 100-2, 100-3, 100-4, 100-5, 100-6, 100-7, 100-8, 100-9, 100-10).

12. Erster Zugangsknoten nach Anspruch 11, wobei der erste Zugangsknoten so ausgelegt ist, dass er die Schritte eines Verfahrens nach einem der Ansprüche 2 bis 5 ausführt.

13. Zweiter Zugangsknoten (100-2, 100-3, 100-4) zum Optimieren eines Signals, das von einem Endgerät (200) eines Kommunikationsnetzwerks empfangen wird, das eine Mehrzahl von Zugangsknoten (100-1, 100-2, 100-3, 100-4, 100-5, 100-6, 100-7, 100-8, 100-9, 100-10) umfasst, wobei das Endgerät (200) mit einem ersten Zugangsknoten (100-1) der Zugangsknoten (100-1, 100-2, 100-3, 100-4, 100-5, 100-6, 100-7, 100-8, 100-9, 100-10) assoziiert ist, wobei der zweite Zugangsknoten (100-2, 100-3, 100-4) der Zugangsknoten (100-1, 100-2, 100-3, 100-4, 100-5, 100-6, 100-7, 100-8, 100-9, 100-10) ausgelegt ist zum:
- Empfangen einer Anforderung (22; 22') vom ersten Zugangsknoten (100-1), wobei die Anforderung (22; 22') Informationen in Bezug auf ein Signal (10-2, 10-3, 10-4) anfordert, das vom Endgerät am zweiten Zugangsknoten (100-2, 100-3, 100-4) empfangen wird,
- Empfangen des Signals (10-2, 10-3, 10-4) vom Endgerät (200),
- Erhalten der angeforderten Informationen vom empfangenen Signal (10-2, 10-3, 10-4),
- Senden der angeforderten Informationen an den ersten Zugangsknoten (100-1), und
- Senden von Informationen an den ersten Zugangsknoten, die geeignet sind, um den ersten Zugangsknoten (100-1) zum Bestimmen zu befähigen, ob der zweite Zugangsknoten (100-2, 100-3, 100-4) potenziell zum Erhalten und Senden von Informationen an den ersten Zugangsknoten (100-1) zum Optimieren des Signals am ersten Zugangsknoten (100-1) geeignet ist, wobei die Informationen, die zum Befähigen des ersten Zugangsknotens (100-1) geeignet sind, mindestens eine anzeigen von:
- einer Charakteristik einer Verbindungsstrecke vom Endgerät (200) zum zweiten Zugangsknoten (100-2, 100-3, 100-4),
- einer Charakteristik einer Verbindungsstrecke zwischen dem ersten Zugangsknoten (100-1) und dem zweiten Zugangsknoten (100-2, 100-3, 100-4),
- einer Beziehung des zweiten Zugangsknotens (100-2, 100-3, 100-4) zum Endgerät (200) und mindestens einem weiteren Endgerät (200'),
- einer Last des zweiten Zugangsknotens (100-2, 100-3, 100-4),
- Standortinformationen des zweiten Zugangsknotens (100-2, 100-3, 100-4),
- Betriebs- und Wartungsinformationen in Bezug auf den zweiten Zugangsknoten (100-2, 100-3, 100-4) und
- Vorkonfigurationsinformationen in Bezug auf den zweiten Zugangsknoten (100-2, 100-3, 100-4).

14. Zweiter Zugangsknoten nach Anspruch 13, wobei der zweite Zugangsknoten so ausgelegt ist, dass er die Schritte eines Verfahrens nach einem der Ansprüche 7 bis 10 ausführt.

15. Kommunikationsnetzwerk, umfassend einen ersten Zugangsknoten nach Anspruch 11 oder 12 und einen zweiten Zugangsknoten nach Anspruch 13 oder 14.

## Revendications

1. Procédé d'optimisation d'un signal reçu en provenance d'un terminal (200) d'un réseau de communication comprenant une pluralité de noeuds d'accès (100-1, 100-2, 100-3, 100-4, 100-5, 100-6, 100-7, 100-8, 100-9, 100-10), dans lequel le terminal (200) est associé à un premier nœud d'accès (100-1) parmi les noeuds d'accès (100-1, 100-2, 100-3, 100-4, 100-5, 100-6, 100-7, 100-8, 100-9, 100-10), le procédé comprenant les étapes suivantes effectuées par le premier nœud d'accès (100-1) :
- la réception d'un premier signal (10-1) en provenance du terminal (200),
- l'envoi d'une demande (22 ; 22') à un deuxième nœud d'accès (100-2, 100-3, 100-4) parmi les nœuds d'accès (100-1, 100-2, 100-3, 100-4, 100-5, 100-6, 100-7, 100-8, 100-9, 100-10) pour demander des informations relatives à un deuxième signal (10-2, 10-3, 10-4) reçu en provenance du terminal (200) au deuxième nœud d'accès (100-2, 100-3, 100-4),
- la réception des informations demandées (24 ; 24'),
- la détermination du signal optimisé sur la base des informations reçues et des informations relatives au premier signal (10-1), et
- la détermination d'un ensemble (E2) d'un ou plusieurs parmi les nœuds d'accès (100-2, 100-3, 100-4, 100-5, 100-6, 100-7, 100-8, 100-9, 100-10) potentiellement adaptés à l'obtention et l'envoi d'informations au premier nœud d'accès (100-1) pour l'optimisation du signal au premier nœud d'accès (100-1), l'ensemble (E2) comprenant au moins un deuxième nœud d'accès (100-2, 100-3, 100-4) et étant déterminé sur la base d'au moins l'un des critères de sélection suivants :
- une caractéristique d'une liaison du terminal (200) au premier nœud d'accès (100-1) comparée à une caractéristique d'une liaison du terminal (200) à au moins un autre parmi les nœuds d'accès (100-1, 100-2, 100-3, 100-4, 100-5, 100-6, 100-7, 100-8, 100-9, 100-10),
- une caractéristique d'une liaison entre le premier nœud d'accès (100-1) et au moins un autre parmi les nœuds d'accès (100-1, 100-2, 100-3, 100-4, 100-5, 100-6, 100-7, 100-8, 100-9, 100-10),
- une capacité du premier nœud d'accès (100-1),
- une relation d'au moins un autre parmi les nœuds d'accès (100-1, 100-2, 100-3, 100-4, 100-5, 100-6, 100-7, 100-8, 100-9, 100-10) au terminal (200) et à au moins un autre terminal (200'),
- une charge d'au moins un autre parmi les noeuds d'accès (100-1, 100-2, 100-3, 100-4, 100-5, 100-6, 100-7, 100-8, 100-9, 100-10),
- des informations d'emplacement d'au moins un autre parmi les noeuds d'accès (100-1, 100-2, 100-3, 100-4, 100-5, 100-6, 100-7, 100-8, 100-9, 100-10) en relation avec des informations d'emplacement du premier nœud d'accès (100-1),
- des informations de fonctionnement et de maintenance relatives à au moins un autre parmi les nœuds d'accès (100-1, 100-2, 100-3, 100-4, 100-5, 100-6, 100-7, 100-8, 100-9, 100-10), et
- des informations de préconfiguration relatives à au moins un autre parmi les nœuds d'accès (100-1, 100-2, 100-3, 100-4, 100-5, 100-6, 100-7, 100-8, 100-9, 100-10).

2. Procédé selon la revendication 1, dans lequel la demande (22 ; 22') comprend des informations identifiant un type d'informations demandées et/ou un ou plusieurs paramètres pour spécifier des informations dédiées relatives au deuxième signal (10-2, 10-3, 10-4).

3. Procédé selon la revendication 1 ou 2, comprenant en outre l'étape de :
- la réception, en provenance du deuxième nœud d'accès (100-2), d'informations relatives à un signal (10-2') provenant d'un autre terminal (200'),
dans lequel l'étape de la détermination du signal optimisé est en outre basée sur des informations reçues relatives au signal (10-2') provenant de l'autre terminal (200').

4. Procédé selon l'une quelconque des revendications précédentes, dans lequel la demande (22') comprend des informations pour amener le deuxième nœud d'accès (100-2, 100-3, 100-4) à envoyer au moins une autre information relative à au moins un autre deuxième signal (10-2, 10-3, 10-4) reçu à la suite du deuxième signal (10-2, 10-3, 10-4) en provenance du terminal (200) au deuxième nœud d'accès (100-2, 100-3, 100-4) et dans lequel le premier nœud d'accès (100-1) détermine au moins un autre signal optimisé sur la base de l'au moins une autre information reçue et des informations relatives à au moins un autre premier signal (10-1) reçu à la suite du premier signal (10-1) en provenance du terminal (200) au premier nœud d'accès (100-1).

5. Procédé selon l'une quelconque des revendications précédentes, comprenant en outre les étapes de :
- l'obtention d'informations conditionnelles pour spécifier une ou plusieurs conditions relatives à l'obtention et/ou l'envoi des informations relatives au deuxième signal (10-2, 10-3, 10-4) en provenance du terminal (200), et
- l'envoi des informations conditionnelles au deuxième nœud d'accès (100-2, 100-3, 100-4).

6. Procédé d'optimisation d'un signal reçu en provenance d'un terminal (200) d'un réseau de communication comprenant une pluralité de nœuds d'accès (100-1, 100-2, 100-3, 100-4, 100-5, 100-6, 100-7, 100-8, 100-9, 100-10), dans lequel le terminal (200) est associé à un premier nœud d'accès (100-1) parmi les nœuds d'accès (100-1, 100-2, 100-3, 100-4, 100-5, 100-6, 100-7, 100-8, 100-9, 100-10), le procédé comprenant les étapes suivantes effectuées par un deuxième nœud d'accès (100-2, 100-3, 100-4) parmi les nœuds d'accès (100-1, 100-2, 100-3, 100-4, 100-5, 100-6, 100-7, 100-8, 100-9, 100-10) :
- la réception d'une demande (22 ; 22') en provenance du premier nœud d'accès (100-1), la demande (22 ; 22') demandant des informations relatives à un signal (10-2, 10-3, 10-4) reçu en provenance du terminal au deuxième nœud d'accès (100-2, 100-3, 100-4),
- la réception du signal (10-2, 10-3, 10-4) en provenance du terminal (200),
- l'obtention des informations demandées à partir du signal reçu (10-2, 10-3, 10-4),
- l'envoi des informations demandées au premier nœud d'accès (100-1), et
- l'envoi, du deuxième nœud d'accès (100-2, 100-3, 100-4) au premier nœud d'accès, d'informations adaptées pour aider le premier nœud d'accès (100-1) à déterminer si le deuxième nœud d'accès (100-2, 100-3, 100-4) est potentiellement adapté à l'obtention et l'envoi d'informations au premier nœud d'accès (100-1) pour l'optimisation du signal au premier nœud d'accès (100-1), dans lequel les informations adaptées pour aider le premier nœud d'accès (100-1) indiquent au moins l'une de :
- une caractéristique d'une liaison du terminal (200) au deuxième nœud d'accès (100-2, 100-3, 100-4),
- une caractéristique d'une liaison entre le premier nœud d'accès (100-1) et le deuxième nœud d'accès (100-2, 100-3, 100-4),
- une relation du deuxième nœud d'accès (100-2, 100-3, 100-4) au terminal (200) et au moins un autre terminal (200'),
- une charge du deuxième nœud d'accès (100-2, 100-3, 100-4),
- des informations d'emplacement du deuxième nœud d'accès (100-2, 100-3, 100-4),
- des informations de fonctionnement et de maintenance relatives au deuxième nœud d'accès (100-2, 100-3, 100-4), et
- des informations de préconfiguration relatives au deuxième nœud d'accès (100-2, 100-3, 100-4).

7. Procédé selon la revendication 6, dans lequel la demande (22 ; 22') comprend des informations identifiant un type d'informations demandées et/ou un ou plusieurs paramètres pour spécifier des informations dédiées relatives au signal et dans lequel les informations demandées sont obtenues respectivement en fonction du type identifié ou des informations dédiées spécifiées.

8. Procédé selon la revendication 6 ou 7, dans lequel la demande (22') comprend des informations pour amener le deuxième nœud d'accès (100-2, 100-3, 100-4) à envoyer au moins une autre information relative à au moins un autre signal (10-2, 10-3, 10-4) reçu à la suite du signal (10-2, 10-3, 10-4) en provenance du terminal (200) au deuxième nœud d'accès (100-2, 100-3, 100-4) et dans lequel le deuxième nœud d'accès (100-2, 100-3, 100-4) reçoit l'au moins un autre signal (10-2, 10-3, 10-4) en provenance du terminal (200), obtient l'au moins une autre information demandée à partir de l'au moins un autre signal reçu (10-2, 10-3, 10-4), et envoie l'au moins une autre information demandée au premier nœud d'accès (100-1).

9. Procédé selon l'une quelconque des revendications 6 à 8, comprenant en outre les étapes de
- la détermination d'informations relatives à un signal (10-2') provenant d'un autre terminal (200'), et
- l'envoi des informations obtenues au premier nœud d'accès (100-1).

10. Procédé selon l'une quelconque des revendications 6 à 9, comprenant en outre les étapes de :
- l'obtention d'informations conditionnelles pour spécifier une ou plusieurs conditions relatives à l'obtention et/ou l'envoi des informations relatives au deuxième signal (10-2, 10-3, 10-4) en provenance du terminal (200),
- l'exécution de l'obtention et/ou l'envoi en conformité avec l'une ou plusieurs conditions spécifiées.

11. Premier nœud d'accès (100-1) pour l'optimisation d'un signal reçu en provenance d'un terminal (200) d'un réseau de communication comprenant une pluralité de nœuds d'accès (100-1, 100-2, 100-3, 100-4, 100-5, 100-6, 100-7, 100-8, 100-9, 100-10), dans lequel le terminal (200) est associé au premier nœud d'accès (100-1) parmi les nœuds d'accès (100-1, 100-2, 100-3, 100-4, 100-5, 100-6, 100-7, 100-8, 100-9, 100-10), dans lequel le premier nœud d'accès (100-1) est apte à
- recevoir le premier signal (10-1) en provenance du terminal (200),
- envoyer une demande (22 ; 22') à un deuxième nœud d'accès (100-2, 100-3, 100-4) parmi les nœuds d'accès (100-1, 100-2, 100-3, 100-4, 100-5, 100-6, 100-7, 100-8, 100-9, 100-10) pour demander des informations relatives à un deuxième signal (10-2, 10-3, 10-4) reçu en provenance du terminal (200) au deuxième nœud d'accès (100-2, 100-3, 100-4),
- recevoir les informations demandées (24 ; 24'),
- déterminer le signal optimisé sur la base des informations reçues et des informations relatives au premier signal (10-1), et
- déterminer un ensemble (E2) d'un ou plusieurs parmi les nœuds d'accès (100-2, 100-3, 100-4, 100-5, 100-6, 100-7, 100-8, 100-9, 100-10) potentiellement adaptés à l'obtention et l'envoi d'informations au premier nœud d'accès (100-1) pour l'optimisation du signal au premier nœud d'accès (100-1), l'ensemble (E2) comprenant au moins un deuxième nœud d'accès (100-2, 100-3, 100-4) et étant déterminé sur la base d'au moins l'un des critères de sélection suivants :
- une caractéristique d'une liaison du terminal (200) au premier nœud d'accès (100-1) comparée à une caractéristique d'une liaison du terminal (200) à au moins un autre parmi les nœuds d'accès (100-1, 100-2, 100-3, 100-4, 100-5, 100-6, 100-7, 100-8, 100-9, 100-10),
- une caractéristique d'une liaison entre le premier nœud d'accès (100-1) et au moins un autre parmi les nœuds d'accès (100-1, 100-2, 100-3, 100-4, 100-5, 100-6, 100-7, 100-8, 100-9, 100-10),
- une capacité du premier nœud d'accès (100-1),
- une relation d'au moins un autre parmi les nœuds d'accès (100-1, 100-2, 100-3, 100-4, 100-5, 100-6, 100-7, 100-8, 100-9, 100-10) au terminal (200) et à au moins un autre terminal (200'),
- une charge d'au moins un autre parmi les nœuds d'accès (100-1, 100-2, 100-3, 100-4, 100-5, 100-6, 100-7, 100-8, 100-9, 100-10),
- des informations d'emplacement d'au moins un autre parmi les nœuds d'accès (100-1, 100-2, 100-3, 100-4, 100-5, 100-6, 100-7, 100-8, 100-9, 100-10) en relation avec des informations d'emplacement du premier nœud d'accès (100-1),
- des informations de fonctionnement et de maintenance relatives à au moins un autre parmi les nœuds d'accès (100-1, 100-2, 100-3, 100-4, 100-5, 100-6, 100-7, 100-8, 100-9, 100-10), et
- des informations de préconfiguration relatives à au moins un autre parmi les nœuds d'accès (100-1, 100-2, 100-3, 100-4, 100-5, 100-6, 100-7, 100-8, 100-9, 100-10).

12. Premier nœud d'accès selon la revendication 11, dans lequel le premier nœud d'accès est apte à effectuer les étapes d'un procédé selon les revendications 2 à 5.

13. Deuxième nœud d'accès (100-2, 100-3, 100-4) pour l'optimisation d'un signal reçu en provenance d'un terminal (200) d'un réseau de communication comprenant une pluralité de nœuds d'accès (100-1, 100-2, 100-3, 100-4, 100-5, 100-6, 100-7, 100-8, 100-9, 100-10), dans lequel le terminal (200) est associé à un premier nœud d'accès (100-1) parmi les nœuds d'accès (100-1, 100-2, 100-3, 100-4, 100-5, 100-6, 100-7, 100-8, 100-9, 100-10), dans lequel le deuxième nœud d'accès (100-2, 100-3, 100-4) parmi les nœuds d'accès (100-1, 100-2, 100-3, 100-4, 100-5, 100-6, 100-7, 100-8, 100-9, 100-10) est apte à :
- recevoir une demande (22 ; 22') en provenance du premier nœud d'accès (100-1), la demande (22 ; 22') demandant des informations relatives à un signal (10-2, 10-3, 10-4) reçu en provenance du terminal au deuxième nœud d'accès (100-2, 100-3, 100-4),
- recevoir le signal (10-2, 10-3, 10-4) en provenance du terminal (200),
- obtenir des informations demandées à partir du signal reçu (10-2, 10-3, 10-4),
- envoyer des informations demandées au premier nœud d'accès (100-1), et
- envoyer, au premier nœud d'accès, des informations adaptées pour aider le premier nœud d'accès (100-1) à déterminer si le deuxième nœud d'accès (100-2, 100-3, 100-4) est potentiellement adapté à l'obtention et l'envoi d'informations au premier nœud d'accès (100-1) pour l'optimisation du signal au premier nœud d'accès (100-1), dans lequel les informations adaptées pour aider le premier nœud d'accès (100-1) indiquent au moins l'une de :
- une caractéristique d'une liaison du terminal (200) au deuxième nœud d'accès (100-2, 100-3, 100-4),
- une caractéristique d'une liaison entre le premier nœud d'accès (100-1) et le deuxième nœud d'accès (100-2, 100-3, 100-4),
- une relation du deuxième nœud d'accès (100-2, 100-3, 100-4) au terminal (200) et au moins un autre terminal (200'),
- une charge du deuxième nœud d'accès (100-2, 100-3, 100-4),
- des informations d'emplacement du deuxième nœud d'accès (100-2, 100-3, 100-4),
- des informations de fonctionnement et de maintenance relatives au deuxième nœud d'accès (100-2, 100-3, 100-4), et
- des informations de préconfiguration relatives au deuxième nœud d'accès (100-2, 100-3, 100-4).

14. Deuxième nœud d'accès selon la revendication 13, dans lequel le deuxième nœud d'accès est apte à effectuer les étapes d'un procédé selon les revendications 7 à 10.

15. Réseau de communication comprenant un premier nœud d'accès selon la revendication 11 ou 12 et un deuxième nœud d'accès selon la revendication 13 ou 14.
